# FASCICULE DE BREVET EUROPEEN

(11) **EP 2 747 271 B1**
(45) Date de publication et mention de la délivrance du brevet: **14.10.2015**
(21) Numéro de dépôt: 13197646.6
(22) Date de dépôt: 17.12.2013
(51) Int. Cl.: H02M 7/757, H02H 7/122, H02H 7/20

(54) **Dispositif de protection contre une surintensité électrique d'au moins une branche électronique de commutation, système de conversion comportant un tel dispositif de protection, et procédé de pilotage associé**
Schutzvorrichtung gegen Überlaststrom mindestens eines elektronischen Schaltzweiges, Stromumwandlungssystem, das eine solche Schutzvorrichtung umfasst, und entsprechendes Steuerverfahren
Device for protection against an electrical overcurrent of at least one electronic switching branch, conversion system comprising such a protection device, and related control method

(30) Priorité: 21.12.2012 FR 1262618
(43) Date de publication de la demande: 25.06.2014
(73) Titulaire: Schneider Electric Industries SAS, 92500 Rueil-Malmaison (FR)
(72) Inventeur: Reymond, Bruno, 38430 Moirans (FR); Vallet, Maria, 38240 Meylan (FR)
(74) Mandataire: Myon, Gérard Jean-Pierre

(56) Documents cités:
- CN-Y- 201 039 049
- US-A- 5 375 028
- US-A1- 2003 137 858
- US-A1- 2011 133 817
- US-B1- 6 288 881

## Description

La présente invention concerne un dispositif de protection contre une surintensité électrique, d'au moins une branche électronique de commutation d'un système de conversion électrique, la ou chaque branche comprenant deux demi-branches de commutation reliées en série en une borne intermédiaire, au moins une demi-branche comportant au moins un organe de commutation, le ou chaque organe de commutation comprenant un premier interrupteur électronique commandable et une diode connectée en antiparallèle dudit premier interrupteur électronique.

L'invention concerne également un système de conversion d'une première tension électrique en une deuxième tension électrique comprenant un tel dispositif de protection.

L'invention concerne également un procédé de pilotage d'un tel dispositif de protection.

Le domaine de l'invention est celui des systèmes de conversion d'énergie électrique. L'invention concerne en particulier les installations de production d'énergie électrique comprenant au moins un système de conversion d'énergie électrique, notamment les installations de production d'énergie électrique à partir de modules photovoltaïques.

On connaît un dispositif de protection du type précité. Un tel dispositif de protection est utilisé au sein d'un onduleur de tension connecté entre un module photovoltaïque, fournissant un courant électrique continu, et un réseau alternatif triphasé. L'onduleur de tension comporte trois branches de commutation, chaque branche comprenant deux interrupteurs électroniques et deux diodes. Chaque diode est connectée en antiparallèle d'un interrupteur électronique. Le dispositif de protection comprend plusieurs contacteurs électriques et/ou plusieurs disjoncteurs, chaque contacteur et/ou chaque disjoncteur étant connecté en série entre une sortie de phase de l'onduleur et le réseau électrique.

En régime nominal, la valeur de la tension d'entrée de l'onduleur, du côté du module photovoltaïque, est supérieure à valeur de la tension de sortie de l'onduleur, du côté du réseau. Dans ce cas, le courant électrique circule depuis le module photovoltaïque vers le réseau, via l'onduleur.

Lorsque qu'un défaut se produit, tel qu'un court-circuit électrique du côté du module photovoltaïque, ou lorsque la puissance électrique en entrée de l'onduleur diminue subitement, la tension d'entrée de l'onduleur baisse brusquement et descend en-dessous de la tension crête du réseau. Dans ce cas, le courant électrique circule depuis le réseau vers le module photovoltaïque, via l'onduleur. Si l'intensité du courant circulant dans chaque diode de l'onduleur dépasse son intensité nominale de fonctionnement, la diode est susceptible de se casser. Or, si la diminution de la tension d'entrée de l'onduleur s'effectue sur un temps très court, typiquement un temps inférieur à la constante de temps caractéristique du contacteur, ce dernier s'avère trop lent pour pouvoir ouvrir le circuit électrique et ainsi empêcher la casse de la diode.

Pour éviter ce phénomène, une première solution connue consiste à connecter une impédance, en série, entre chaque sortie de phase de l'onduleur et le réseau électrique. La valeur de cette impédance est choisie de sorte à limiter le courant de court-circuit présumé venant du réseau. Cependant, cette première solution entraîne une chute de tension en ligne au niveau des sorties de phase de l'onduleur, ce qui impose également de surdimensionner la puissance apparente de l'onduleur. Cette solution conduit par conséquent à une dégradation du rendement global du système de conversion et à des surcoûts de réalisation.

Une deuxième solution connue est de connecter une diode en série entre la sortie des modules photovoltaïque et l'entrée de l'onduleur. Cette solution, si elle permet de satisfaire aux exigences de temps de réponse pour la protection des diodes, n'est toutefois pas satisfaisante du point de vue de la perte de rendement qu'elle occasionne. En effet, la présence de la diode en entrée de l'onduleur entraîne une chute de la tension d'entrée, et par conséquent une dégradation du rendement global du système de conversion.

Une troisième solution connue consiste à utiliser des fusibles au sein du dispositif de protection. Chaque fusible est alors connecté en série entre une sortie de phase de l'onduleur et le réseau électrique. Comme pour la deuxième solution, cette troisième solution n'est pas non plus satisfaisante du point de vue du rendement, les fusibles devant atteindre une température relativement élevée pour fonctionner correctement. En outre, l'utilisation de fusibles entraîne des coûts d'exploitation importants.

US 2003/137858 A1 décrit un dispositif de protection contre une surintensité de diodes parasites formées dans un élément de commutation, telles que des diodes formées entre l'électrode de source et l'électrode de drain d'un transistor MOSFET.

US 5,375,028 A décrit un dispositif de protection contre une surintensité de diodes de roue libre d'un système de conversion électrique comportant des interrupteurs commandables, les diodes de roue libre étant connectées en antiparallèle des interrupteurs et protégées via la commutation de certains de ces interrupteurs en cas de détection d'une surintensité.

US 6,288,881 B1 décrit un circuit de protection contre une surintensité d'une diode de retour dans un chargeur de batterie, la diode de retour étant connectée en série d'un interrupteur de pilotage de la charge de la batterie.

Un but de l'invention est donc de proposer un dispositif de protection d'au moins une branche électronique de commutation permettant de protéger chaque diode de la branche contre une surintensité électrique, tout en présentant une vitesse de déclenchement améliorée et en conservant sensiblement le rendement de la branche.

À cet effet, l'invention a pour objet un dispositif de protection selon la revendication 1 ou selon la revendication 3.

Suivant d'autres aspects avantageux de l'invention, le dispositif de protection comprend une ou plusieurs des caractéristiques suivantes, prises isolément ou suivant toutes les combinaisons techniquement possibles, selon les revendications dépendantes 2 et 4 à 6.

L'invention a également pour objet un système, selon la revendication 7, de conversion d'une première tension électrique en une deuxième tension électrique.

L'invention a également pour objet un procédé de pilotage d'un dispositif de protection, selon la revendication 8.

Suivant d'autres aspects avantageux de l'invention, le procédé comprend une ou plusieurs des caractéristiques suivantes, prises isolément ou suivant toutes les combinaisons techniquement possibles, selon les revendications dépendantes 9 à 14.

Ces caractéristiques et avantages de l'invention apparaîtront à la lecture de la description qui va suivre, donnée uniquement à titre d'exemple non limitatif, et faite en référence aux dessins annexés, sur lesquels :
- la figure 1 est une vue schématique d'un système de conversion selon l'invention, connecté entre une source fournissant une première tension électrique et une charge présentant entre ses bornes une deuxième tension électrique,
- la figure 2 est un schéma électrique du système de conversion de la figure 1 selon un premier mode de réalisation, comportant un onduleur triphasé comprenant trois branches de commutation, et un dispositif de protection selon l'invention, le dispositif protégeant chaque branche de commutation et comprenant six interrupteurs électroniques,
- la figure 3 est un schéma électrique d'une variante de réalisation d'un des interrupteurs électroniques du dispositif de protection de la figure 2,
- la figure 4 est un organigramme représentant un procédé de pilotage du dispositif de protection selon l'invention,
- la figure 5 est une vue analogue à celle de la figure 2 selon un deuxième mode de réalisation de l'invention, le système de conversion comportant un onduleur triphasé comprenant trois branches de commutation, et un dispositif de protection selon l'invention, le dispositif protégeant chaque branche de commutation et comprenant trois interrupteurs électroniques, trois capteurs de courant et trois modules de détection d'une surintensité électrique,
- la figure 6 est un schéma électrique d'une variante de réalisation d'un des interrupteurs électroniques du dispositif de protection de la figure 5,
- la figure 7 est un organigramme représentant une étape du procédé de pilotage de la figure 4, et
- la figure 8 est une vue analogue à celle de la figure 2 selon un troisième mode de réalisation de l'invention.

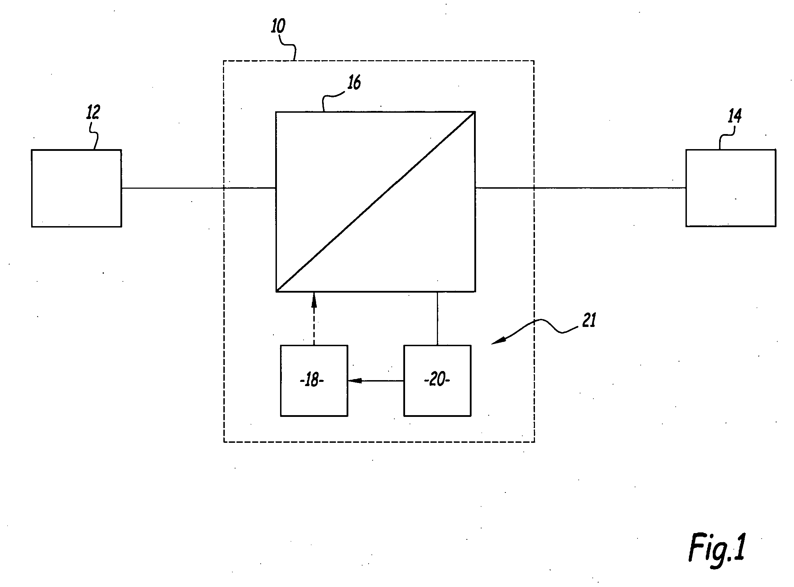

La figure 1 représente un système 10 de conversion d'une première tension électrique en une deuxième tension électrique. Le système de conversion 10 est relié d'une part à une source 12 fournissant la première tension électrique, et d'autre part à une charge 14 débitant entre ses bornes la deuxième tension électrique.

Le système de conversion 10 comprend un convertisseur 16 de la première tension électrique en la deuxième tension électrique. Ce convertisseur 16 est connecté entre la source 12 et la charge 14.

Le système de conversion 10 comprend également un dispositif 18 de commande du convertisseur 16, des moyens 20 de mesure d'une grandeur relative à au moins un courant circulant au sein du convertisseur 16, et un dispositif 21 de protection du convertisseur 16 contre une surintensité électrique.

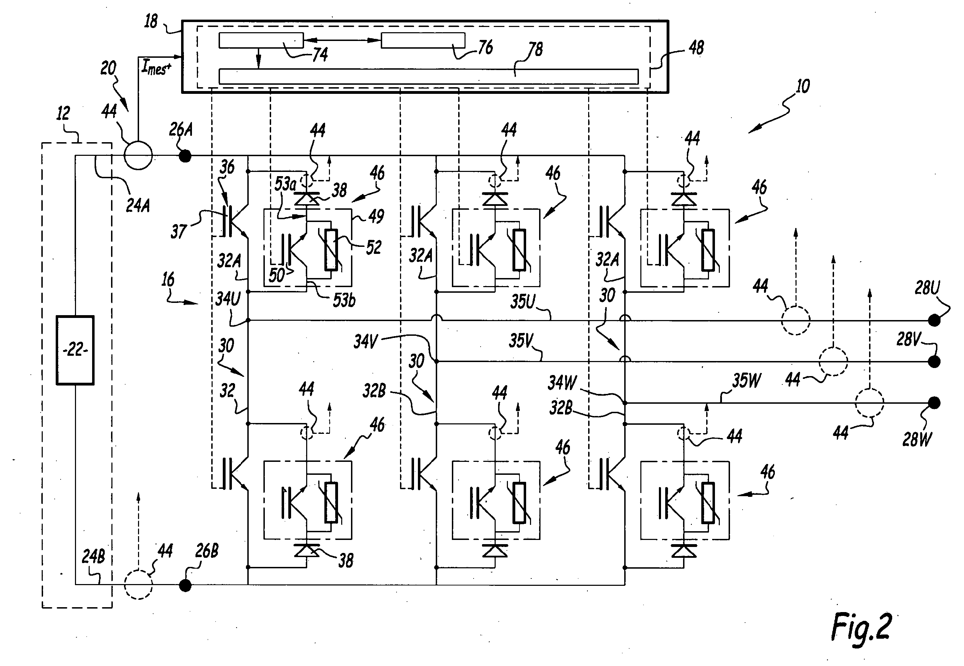

La source 12 est par exemple une source de courant continu. Dans l'exemple de réalisation de la figure 2, la source de courant continu 12 est formée d'une installation 22 de modules photovoltaïques reliée à un bus positif 24A de tension continue et à un bus négatif 24B de tension continue. Elle présente une tension nominale de valeur par exemple comprise entre 600 Vcc et 800 Vcc. En variante, la source de courant continu 12 est formée d'un dispositif de stockage d'énergie électrique, tel qu'une batterie par exemple.

La charge 14 est par exemple un réseau électrique polyphasé. Le réseau électrique 14 est, dans l'exemple de réalisation de la figure 2, un réseau alternatif triphasé de tension de valeur par exemple égale à 240V phase neutre ou 380 Vac entre phases. Selon cet exemple de réalisation, le convertisseur 16 est un onduleur de tension, propre à convertir une tension continue d'entrée en une tension alternative triphasée de sortie, et le système de conversion 10 est un système de conversion d'une tenson continue d'entrée en une tension alternative triphasée de sortie.

Le convertisseur 16 comporte au moins deux bornes d'entrée 26A, 26B et au moins deux bornes de sortie 28U, 28V, 28W. Dans l'exemple de réalisation de la figure 2, l'onduleur de tension 16 comporte une borne positive d'entrée 26A, une borne négative d'entrée 26B, et trois bornes de sortie 28U, 28V, 28W. Chaque borne de sortie 28U, 28V, 28W correspond à une phase respective de la tension alternative triphasée de sortie propre à être délivrée par l'onduleur 16.

L'onduleur de tension 16 comporte, pour chaque borne de sortie 28U, 28V, 28W correspondant à une phase respective U, V, W, une branche de commutation 30 connectée entre les deux bornes d'entrée 26A, 26B.

Chaque branche de commutation 30 comprend deux demi-branches de commutation 32A, 32B reliées en série en une borne intermédiaire 34U, 34V, 34W respective. L'onduleur de tension 16 comporte ainsi trois bornes de sortie intermédiaires 34U, 34V, 34W. Chaque borne de sortie intermédiaire 34U, 34V, 34W correspond à une phase respective de la tension alternative triphasée de sortie propre à être délivrée par l'onduleur 16. Dans l'exemple de réalisation de la figure 2, chaque borne de sortie intermédiaire 34U, 34V, 34W est reliée à une borne de sortie 28U, 28V, 28W respective, via une liaison filaire 35U, 35V, 35W.

Chaque première demi-branche 32A est reliée entre la borne positive d'entrée 26A et une borne de sortie intermédiaire 34U, 34V, 34W respective. Chaque deuxième demi-branche 32B est reliée entre la borne négative d'entrée 26B et une borne de sortie intermédiaire 34U, 34V, 34W respective.

Chaque demi-branche 32A, 32B comprend un organe de commutation 36. En variante non représentée, chaque demi-branche 32A, 32B comprend un nombre N1 d'organes de commutation 36, N1 étant un nombre entier supérieur ou égal à deux. Cette variante correspond par exemple à un convertisseur 16 de type « buck ».

En variante encore, pour chaque branche de commutation 30, seule une demi-branche 32A, 32B comporte un nombre N2 d'organes de commutation, N2 étant un nombre entier supérieur ou égal à un. Cette variante correspond par exemple à un convertisseur 16 dont la structure est de type multi-niveaux.

Comme connu en soi, chaque organe de commutation 36 est bidirectionnel en courant et unidirectionnel en tension. Chaque organe de commutation 36 comprend un premier interrupteur électronique commandable 37 et une diode 38 connectée en antiparallèle assurant ainsi des trajets de circulation bidirectionnelle de courant.

Chaque premier interrupteur 37 est par exemple formé d'un transistor bipolaire à grille isolée, également appelé transistor IGBT (de l'anglais Insulated Gate Bipolar Transistor). Tous les transistors IGBT 37 sont, par exemple, identiques. La grille de chaque transistor IGBT 37 est reliée au dispositif de commande 18 pour recevoir un signal de commande correspondant.

En variante, le transistor IGBT 37 est remplacé par tout composant électronique semi-conducteur comprenant une électrode de commande et deux électrodes de conduction, tel qu'un transistor bipolaire, un transistor à effet de champ, un thyristor, un thyristor à extinction par la gâchette, un thyristor IGCT (de l'anglais Insulated Gate-Commutated Thyristor), ou un thyristor MCT (de l'anglais MOS Controlled Thyristor) par exemple.

Le dispositif de commande 18 est relié à chacun des premiers interrupteurs électroniques 37, comme indiqué précédemment, et est propre à envoyer des signaux de commande auxdits premiers interrupteurs 37.

Les moyens de mesure 20 sont agencés au sein du dispositif de protection 21. Dans l'exemple de réalisation de la figure 2, les moyens de mesure 20 comprennent un organe de mesure 44. L'organe de mesure 44 est avantageusement agencé entre l'installation 22 et la borne positive d'entrée 26A, sur le bus positif 24A de tension continue.

En variante, l'organe de mesure 44, représenté en traits pointillés en bas à gauche de la figure 2, est agencé entre l'installation 22 et la borne négative d'entrée 26B, sur le bus négatif 24B de tension continue.

En variante encore, les moyens de mesure 20 comprennent trois organes de mesure 44, représentés en traits pointillés à droite de la figure 2. Chaque organe de mesure 44 est agencé entre une borne de sortie intermédiaire 34U, 34V, 34W respective et une borne de sortie 28U, 28V, 28W associée, sur une liaison filaire 35U, 35V, 35W correspondante. Selon cette variante de réalisation, chaque organe de mesure 44 est propre à mesurer l'intensité du courant circulant dans une liaison filaire 35U, 35V, 35W, comme détaillé par la suite.

Dans les trois exemples de réalisation décrits ci-dessus, l'organe de mesure 44 est de préférence un capteur de courant intégré par défaut au sein de l'onduleur de tension 16. En variante, l'organe de mesure 44 est un capteur de courant additionnel, par exemple un capteur de type « shunt » ou un capteur de courant à effet Hall ou encore un capteur de type « Rogowski », ces capteurs étant connus.

En variante encore, les moyens de mesure 20 comprennent six organes de mesure 44, représentés en traits pointillés au centre de la figure 2. Chaque organe de mesure 44 est agencé au niveau d'une demi-branche de commutation 32A, 32B, sur la connexion antiparallèle d'une diode 38 respective. Selon cette variante de réalisation, chaque organe de mesure 44 est propre à mesurer l'intensité du courant circulant dans la diode 38 associée, comme détaillé par la suite. Selon cette variante de réalisation, l'organe de mesure 44 est, par exemple, un capteur de courant additionnel du type précité ou un capteur de courant intégré au transistor IGBT 37 de la demi-branche 32A, 32B associée.

Dans l'exemple de réalisation de la figure 2, l'organe de mesure 44 est propre à mesurer l'intensité du courant circulant dans le bus positif 24A de tension continue, et à fournir un signal Iₘₑₛ₊ image de cette mesure.

Pour chaque branche de commutation 30, les moyens de mesure 20 sont propres à mesurer au moins une grandeur relative à un courant propre à circuler dans chaque diode 38 de cette branche 30, et à transmettre cette mesure au dispositif de commande 18. Dans l'exemple de réalisation de la figure 2, la grandeur mesurée est l'intensité du courant circulant dans le bus positif 24A de tension continue. L'intensité mesurée du courant circulant dans le bus positif 24A à un instant donné est relative au courant propre à circuler dans chaque diode 38 de l'onduleur 16. En effet, le courant circulant dans le bus positif 24A à un instant donné est formé de la somme des courants circulants dans les trois branches commutation 30 à cet instant. Par conséquent, à un instant donné, le courant circulant dans le bus positif 24A est susceptible d'avoir pour composante le courant circulant au sein d'une des diodes 38 d'une branche de commutation 30, si cette diode 38 est passante à cet instant. Les moyens de mesure 20 sont ainsi propres à réaliser une mesure indirecte d'un courant propre à circuler dans chaque diode 38 de chaque branche 30.

Outre les moyens de mesure 20, le dispositif de protection 21 comprend autant de deuxièmes interrupteurs électroniques 46 que de premiers interrupteurs 37. Plus précisément, le dispositif de protection 21 comprend, pour chaque branche de commutation 30, deux deuxièmes interrupteurs électroniques 46, chaque deuxième interrupteur électronique 46 étant connecté en série de la diode 38 d'une demi-branche de commutation 32A, 32B respective.

En variante non représentée, le dispositif de protection 21 comprend trois deuxièmes interrupteurs électroniques 46. Plus précisément, selon cette variante de réalisation, le dispositif de protection 21 comprend, pour chaque branche de commutation 30, un deuxième interrupteur électronique 46. Chaque deuxième interrupteur électronique 46 est par exemple connecté en série de la diode 38 d'une des premières demi-branches de commutation 32A, et en parallèle du premier interrupteur électronique 37 associé à cette diode 38. En variante, chaque deuxième interrupteur électronique 46 est connecté en parallèle du premier interrupteur électronique 37 d'une des deuxièmes demi-branches de commutation 32B.

Le dispositif de protection 21 comprend également des moyens 48 de commande de chaque deuxième interrupteur électronique 46.

Dans l'exemple de réalisation de la figure 2, chaque deuxième interrupteur électronique 46 comporte une cellule 49. La cellule 49 comprend un transistor IGBT 50, une varistance 52 connectée en parallèle du transistor IGBT 50, une première borne de connexion 53A connectée à l'émetteur du transistor IGBT 50 et une deuxième borne de connexion 53B connectée au collecteur du transistor IBGT 50.

Chaque cellule 49 est agencée dans une demi-branche de commutation 32A, 32B de telle sorte que sa première borne de connexion 53A est connectée à l'anode de la diode 38 associée, ou que sa deuxième borne de connexion 53B est connectée à la cathode de la diode 38 associée. Dans l'exemple de réalisation de la figure 2, trois cellules 49 sont agencées dans les premières demi-branches 53A de telle sorte que leur première borne de connexion 53A est connectée à l'anode d'une diode 38 associée, et trois cellules 49 sont agencées dans les deuxièmes demi-branches 53B de telle sorte que leur deuxième borne de connexion 53B est connectée à la cathode d'une diode 38 associée.

En variante, le transistor IGBT 50 est remplacé par tout composant électronique semi-conducteur comprenant une électrode de commande et deux électrodes de conduction, tel qu'un transistor bipolaire, un transistor à effet de champ, un thyristor, un thyristor à extinction par la gâchette, un thyristor IGCT (de l'anglais Insulated Gate-Commutated Thyristor), ou un thyristor MCT (de l'anglais MOS Controlled Thyristor) par exemple.

En variante ou en complément, la varistance 52 est remplacée par tout composant électrique non-linéaire, tel qu'une diode trisil, une diode transil, un fusible de bas calibre en courant, une résistance métallique non linéaire, une résistance à coefficient de température positive, ou un composant formé d'une combinaison de ces éléments. En variante encore, la varistance 52 est remplacée par un ensemble formé d'un composant électrique non linéaire du type précité et d'un condensateur d'aide à la commutation, connecté en parallèle de ce composant.

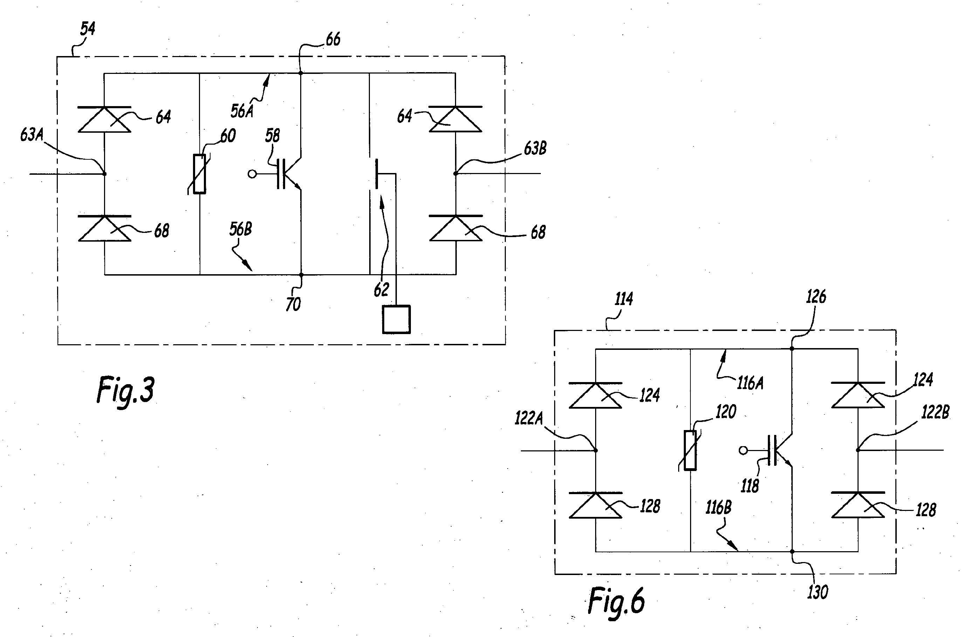

Selon une variante de réalisation représentée sur la figure 3, chaque cellule 49 est remplacée par un interrupteur à coupure assistée hybride 54, tel que décrit dans le document US 4 700 256 A. Un tel interrupteur à coupure assistée hybride permet de réduire les pertes en conduction, et d'ainsi améliorer le rendement de l'onduleur 16.

Comme connu en soi, l'interrupteur à coupure assistée hybride 54 comporte deux bras 56A, 56B, un transistor IGBT 58, une varistance 60 et un contacteur mécanique 62.

Les deux bras 56A, 56B sont reliés entre eux en deux bornes de connexion 63A, 63B. Une première borne de connexion 63A de l'interrupteur 54 est analogue à la première borne de connexion 53A de la cellule 49. Une deuxième borne de connexion 63B de l'interrupteur 54 est analogue à la deuxième borne de connexion 53B de la cellule 49.

Un premier bras 56A comprend deux premières diodes 64 connectées en série par leur cathode respective en un premier point de connexion 66. Un deuxième bras 56B comprend deux deuxièmes diodes 68 connectées en série par leur anode respective en un deuxième point de connexion 70.

Le collecteur, respectivement l'émetteur du transistor IGBT 58 est connecté au premier point de connexion 66, respectivement au deuxième point de connexion 70. La varistance 60 est connectée en parallèle du transistor IGBT 58. Le contacteur mécanique 62 est connecté en parallèle du transistor IGBT 58 et de la varistance 60.

En variante, le transistor IGBT 58 est remplacé par tout composant électronique semi-conducteur comprenant une électrode de commande et deux électrodes de conduction, tel qu'un transistor bipolaire, un transistor à effet de champ, un thyristor, un thyristor à extinction par la gâchette, un thyristor IGCT (de l'anglais Insulated Gate-Commutated Thyristor), ou un thyristor MCT (de l'anglais MOS Controlled Thyristor) par exemple.

En variante ou en complément, la varistance 60 est remplacée par tout composant électrique non-linéaire, tel qu'une diode trisil, une diode transil, un fusible de bas calibre en courant, une résistance métallique non linéaire, une résistance à coefficient de température positive, ou un composant formé d'une combinaison de ces éléments. En variante encore, la varistance 60 est remplacée par un ensemble formé d'un composant électrique non linéaire du type précité et d'un condensateur d'aide à la commutation, connecté en parallèle de ce composant.

Chaque deuxième interrupteur électronique 46 est propre à passer, sous l'action des moyens de commande 48, d'un état passant à un état bloqué.

Les moyens de commande 48 sont avantageusement agencés à l'intérieur du dispositif de commande 18 et sont reliés aux moyens de mesure 20, comme illustré sur la figure 2. Les moyens de commande 48 sont reliés en outre à chacun des deuxièmes interrupteurs électroniques 46, et sont propres à envoyer des signaux de commande auxdits deuxièmes interrupteurs électroniques 46. Plus précisément, l'électrode de commande de chaque deuxième interrupteur électronique 46 est reliée aux moyens de commande 48 pour recevoir un signal de commande correspondant.

Les moyens de commande 48 comportent une unité de traitement d'informations formée, par exemple, d'un processeur de données 74 associé à une mémoire 76. Les moyens de commande 48 comportent en outre au moins un organe de commande relié au processeur 74. Dans l'exemple de réalisation de la figure 2, les moyens de commande 48 comportent un unique organe de commande 78 propre à envoyer un signal de commande aux six deuxièmes interrupteurs électroniques 46. Dans cet exemple de réalisation, le signal de commande est propre à commander l'ouverture ou la fermeture simultanée des six deuxièmes interrupteurs électroniques 46.

L'organe de commande 78 est, par exemple, une carte de contrôle-commande intégrée par défaut au sein du dispositif de commande 18 de l'onduleur de tension 16. En variante, l'organe de commande 78 est une carte de contrôle-commande additionnelle dédiée à la commande des deuxièmes interrupteurs électroniques 46.

En variante encore, les moyens de commande 48 comportent six organes de commande, chaque organe de commande étant propre à envoyer un signal de commande à un des deuxièmes interrupteurs électroniques 46 et étant formé d'une carte de contrôle-commande spécifique. Chaque signal de commande est propre commander l'ouverture ou la fermeture du deuxième interrupteur électronique 46 associé. Cette variante de réalisation permet d'améliorer la modularité des moyens de commande 48.

Le processeur 74 est propre à comparer la valeur du signal Iₘₑₛ₊ à une valeur de référence et à transmettre un ordre de commande à l'organe de commande 78. Dans l'exemple de réalisation de la figure 2, le processeur 74 est propre à comparer la valeur du signal Iₘₑₛ₊ à la valeur nulle, et à transmettre un ordre de commande d'ouverture à l'organe de commande 78 si le signal Iₘₑₛ₊ présente une valeur négative.

La mémoire 76 est propre à stocker une valeur de référence. Dans l'exemple de réalisation de la figure 2, la mémoire 76 est propre à stocker la valeur nulle.

Les moyens de commande 48 sont propres à commander le passage de chaque deuxième interrupteur électronique 46 de son état passant à son état bloqué, en fonction de la grandeur mesurée par les moyens de mesure 20, en l'occurrence l'intensité du courant circulant dans le bus positif 24A de tension continue dans l'exemple de réalisation de la figure 2.

Le dispositif de protection 21 est propre à protéger chaque branche de commutation 30 contre une surintensité électrique. Plus particulièrement, dans l'exemple de réalisation de la figure 2, chaque deuxième interrupteur électronique 46 est propre, par passage de son état passant à son état bloqué, à protéger une diode 38 contre une surintensité électrique.

Le fonctionnement du dispositif de protection 21 selon l'invention va désormais être expliqué.

En fonctionnement nominal, la valeur de la tension d'entrée de l'onduleur 16 est supérieure à valeur de la tension de sortie de l'onduleur 16. L'installation 22 de modules photovoltaïques alimente alors le réseau électrique 14, via l'onduleur 16. Le fonctionnement des premiers interrupteurs électroniques 37 étant connu en soi, celui-ci ne sera pas décrit plus en détail par la suite.

On suppose qu'à un premier instant donné, un défaut se produit, par exemple un défaut de type court-circuit électrique du côté de l'installation 22. La valeur de la tension d'entrée de l'onduleur 16 baisse brusquement et descend en-dessous de la valeur de la tension crête du réseau 14. A partir de ce premier instant, un courant de défaut circule dans au moins deux diodes 38 appartenant à deux branches de commutation 30 distinctes, une première diode 38 appartenant à une première demi-branche 32A d'une branche de commutation 30, et une deuxième diode 38 appartenant à une deuxième demi-branche 32B d'une autre branche de commutation 30. En outre, du fait de la présence du défaut électrique, l'intensité du courant de défaut circulant au sein des deux diodes 38 croît en valeur absolue au cours du temps. Du fait de la circulation d'un courant d'intensité croissante en valeur absolue au sein des deux diodes 38, l'intensité du courant circulant dans le bus positif 24A présente une valeur négative à partir d'un deuxième instant.

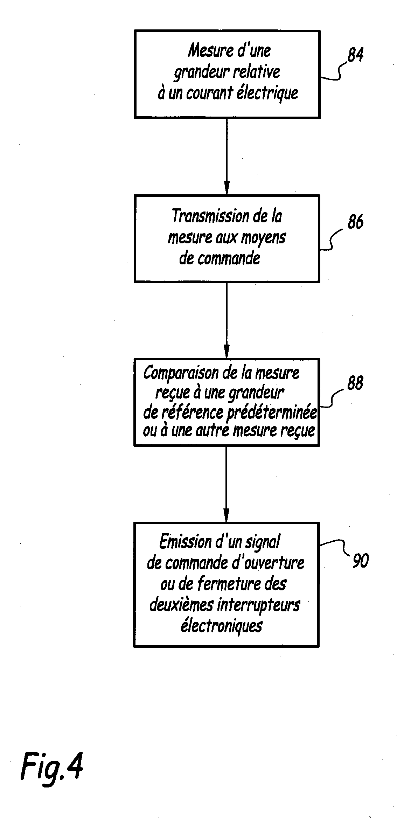

Sur la figure 4 sont représentées les étapes d'un procédé de pilotage du dispositif de protection 21, mis en oeuvre par le dispositif de protection 21.

Au cours d'une étape initiale 84, l'organe 44 mesure l'intensité du courant circulant dans le bus positif 24A de tension continue.

Au cours d'une étape 86 suivante, l'organe de mesure 44 transmet le signal Iₘₑₛ₊ aux moyens de commande 48. Le signal Iₘₑₛ₊ présente une valeur négative.

Au cours d'une étape suivante, les moyens de commande 48 commandent tous les deuxièmes interrupteurs électroniques 46 en fonction de la valeur du signal Iₘₑₛ₊.

Plus précisément, au cours d'une première sous-étape 88 de l'étape de commande, le processeur 74 compare la valeur du signal Iₘₑₛ₊ à la valeur de référence stockée dans la mémoire 76. Plus particulièrement, le processeur 74 compare la valeur du signal Iₘₑₛ₊ à la valeur nulle. Le signal Iₘₑₛ₊ présentant une valeur négative, le processeur 74 transmet alors un ordre de commande d'ouverture des deuxièmes interrupteurs 46 à l'organe de commande 78.

Au cours d'une seconde sous-étape 90 de l'étape de commande, l'organe de commande 78 émet un signal de commande d'ouverture à destination de chacun des deuxièmes interrupteurs électroniques 46. Sous l'action du signal de commande, tous les deuxièmes interrupteurs électroniques 46 passent alors simultanément de leur état passant à leur état bloqué. Plus précisément, sous l'action du signal de commande, le transistor IGBT 50 de chaque deuxième interrupteur 46 passe de son état passant à son état bloqué. La varistance 52 du deuxième interrupteur 46 génère alors une tension inférieure à la tension de claquage du transistor IGBT 50, arrêtant ainsi le passage de l'éventuel courant circulant dans la diode 38 associée. En particulier, le courant de défaut ne circule alors plus dans aucune des diodes 38 de l'onduleur 16.

En outre, au cours de cette même seconde sous-étape 90, l'organe de commande 78 émet un signal d'ouverture forcée à destination de chacun des premiers interrupteurs électroniques 37.

Dans la variante de réalisation selon laquelle le deuxième interrupteur 46 est formé d'un interrupteur à coupure hybride 54, l'application du signal de commande d'ouverture, lors de la seconde sous-étape 90, à chaque deuxième interrupteur électronique 46, comprend une première étape de commande d'ouverture du contacteur mécanique 62, puis, lorsque le contacteur mécanique 62 est ouvert, une deuxième étape de commande d'ouverture du transistor IGBT 58. Par rapport à la cellule 49, l'interrupteur à coupure hybride 54 permet d'améliorer le rendement global de l'onduleur 16, du fait de la présence du contacteur mécanique 62 qui réduit la chute de tension aux bornes de l'interrupteur 54..

Dans la variante selon laquelle l'organe de mesure 44 est agencé sur le bus négatif 24B de tension continue, l'intensité du courant circulant dans le bus négatif 24A présente une valeur positive à partir d'un deuxième instant. En outre, selon cette variante, le processeur 74 est propre à transmettre un ordre de commande d'ouverture à l'organe de commande 78 si le signal image de l'intensité du courant circulant dans le bus négatif 24A présente une valeur positive. Ce signal présentant une valeur positive à partir de ce deuxième instant, le processeur 74 transmet alors un ordre de commande d'ouverture des deuxièmes interrupteurs 46 à l'organe de commande 78 lors de la première sous-étape 88.

Ainsi, selon ce premier mode de réalisation du système de conversion 10, dès que l'intensité d'un courant de défaut circulant au sein d'une diode 38 croît en valeur absolue au cours du temps, l'ensemble des diodes 38 de l'onduleur 16 est protégé, par ouverture simultanée des deuxièmes interrupteurs électroniques 46 du dispositif 21. En outre, l'ouverture des deuxièmes interrupteurs 46 étant pilotée par les moyens de commande 48, la durée totale de déclenchement du dispositif de protection 21 ne dépend que du temps de réaction des moyens de mesure 20 et des moyens de commande 48, du temps de réaction du dispositif de protection 21 et du temps de commutation des deuxièmes interrupteurs électroniques 46. Cette durée de déclenchement est, en tout état de cause, très inférieur à la constante de temps caractéristique des contacteurs, des disjoncteurs et des fusibles de l'art antérieur. En effet, la durée totale est déterministe et ne dépend pas du niveau de courant, ce qui est le cas pour les dispositifs de l'art antérieur.

En outre, selon ce mode de réalisation, chaque deuxième interrupteur électronique 46 est connecté en parallèle d'un premier interrupteur 37 respectif. Le rendement global du système de conversion 10 n'est de ce fait pas affecté, malgré la chute de tension inhérente aux interrupteurs 46. En effet, lors de la commutation des interrupteurs 46, l'énergie électrique est fournie par le réseau alternatif 14.

On conçoit ainsi que le dispositif de protection 21 selon l'invention permet de protéger chaque diode 38 de chaque branche 30 contre une surintensité électrique, tout en présentant une vitesse de déclenchement améliorée et en conservant sensiblement le rendement des branches 30.

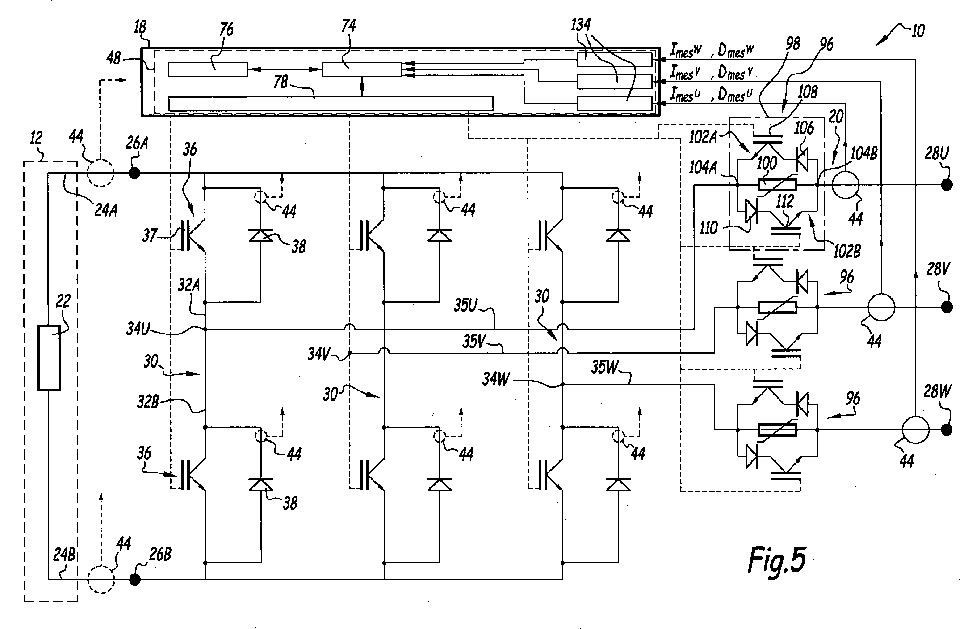

La figure 5 illustre un deuxième mode de réalisation de l'invention pour lequel les éléments analogues au premier mode de réalisation, décrit précédemment, sont repérés par des références identiques, et ne sont donc pas décrits à nouveau.

Les moyens de mesure 20 comprennent trois organes de mesure 44. Chaque organe de mesure 44 est agencé entre une borne de sortie intermédiaire 34U, 34V, 34W respective et une borne de sortie 28U, 28V, 28W associée, sur une liaison filaire 35U, 35V, 35W correspondante. Chaque organe de mesure 44 est propre à mesurer l'intensité du courant circulant dans une liaison filaire 35U, 35V, 35W, et à fournir un signal I_{mesU}, I_{mesV}, I_{mesW} image de cette mesure. En complément, chaque organe de mesure 44 est en outre avantageusement propre à mesurer la dérivée de l'intensité du courant circulant dans une liaison filaire 35U, 35V, 35W, et à fournir un signal D_{mesU}, D_{mesV}, D_{mesW} image de cette mesure. Le signal D_{mesU}, D_{mesV}, respectivement D_{mesW} correspond à la dérivée temporelle du signal I_{mesU}, I_{mesV}, respectivement I_{mesW}.

Selon ce deuxième mode de réalisation, la grandeur mesurée par les moyens de mesure 20 est l'intensité du courant circulant dans une liaison filaire 35U, 35V, 35W. L'intensité mesurée du courant circulant dans une liaison filaire 35U, 35V, 35W à un instant donné est relative au courant propre à circuler dans chaque diode 38 de la branche de commutation 30 associée à cette liaison filaire. En effet, le courant circulant dans une liaison filaire 35U, 35V, 35W à un instant donné est le courant circulant à cet instant dans la branche de commutation 30 associée à cette liaison filaire. Par conséquent, à un instant donné, le courant circulant dans une liaison filaire 35U, 35V, 35W est susceptible d'avoir pour composante le courant circulant au sein d'une des diodes 38 de la branche de commutation 30 associée, si cette diode 38 est passante à cet instant. Les moyens de mesure 20 sont ainsi propres à réaliser une mesure indirecte d'un courant propre à circuler dans chaque diode 38 de chaque branche 30.

Le dispositif de protection 21 comprend trois deuxièmes interrupteurs électroniques 96. Plus précisément, le dispositif de protection 21 comprend, pour chaque branche de commutation 30, un deuxième interrupteur électronique 96 connecté entre la borne de sortie intermédiaire 34U, 34V, 34W de cette branche 30 et la borne de sortie 28U, 28V, 28W associée. Chaque deuxième interrupteur électronique 96 est propre, par passage de son état passant à son état bloqué, à protéger les deux diodes 38 de la branche 30 associée contre une surintensité électrique.

Dans l'exemple de réalisation de la figure 5, chaque deuxième interrupteur électronique 96 comporte une cellule 98. La cellule 98 comporte une varistance 100, deux bras 102A, 102B connectés chacun en parallèle de la varistance 100. Les deux bras 102A, 102B sont reliés entre eux en une première borne de connexion 104A connectée à une borne de sortie intermédiaire 34U, 34V, 34W, et en une deuxième borne de connexion 104B connectée à une borne de sortie 28U, 28V, 28W.

Un premier bras 102A comprend une première diode 106 et un premier transistor IGBT 108 connectés en série. Dans l'exemple de réalisation de la figure 5, l'émetteur du premier transistor IGBT 108 est connecté à la première borne de connexion 104A, la cathode de la première diode 106 est connectée au collecteur du premier transistor IGBT 108, et l'anode de la première diode 106 est connectée à la deuxième borne de connexion 104B. En variante non représentée, la cathode de la première diode 106 est connectée à la première borne de connexion 104A, l'émetteur du premier transistor IGBT 108 est connecté à l'anode de la première diode 106, et le collecteur du premier transistor IGBT 108 est connecté à la deuxième borne de connexion 104B.

Un deuxième bras 102B comprend une deuxième diode 110 et un deuxième transistor IGBT 112 connectés en série. Dans l'exemple de réalisation de la figure 5, l'émetteur du deuxième transistor IGBT 112 est connecté à la deuxième borne de connexion 104B, la cathode de la deuxième diode 110 est connectée au collecteur du deuxième transistor IGBT 112, et l'anode de la deuxième diode 110 est connectée à la première borne de connexion 104A. En variante non représentée, la cathode de la deuxième diode 110 est connectée à la deuxième borne de connexion 104B, l'émetteur du deuxième transistor IGBT 112 est connecté à l'anode de la deuxième diode 110, et le collecteur du deuxième transistor IGBT 112 est connecté à la première borne de connexion 104A.

Selon une variante de réalisation représentée sur la figure 6, chaque cellule 98 est remplacée par un organe 114. L'organe 114 comporte deux bras 116A, 116B, un transistor IGBT 118, et une varistance 120.

Les deux bras 116A, 116B sont reliés entre eux en deux bornes de connexion 122A, 122B.

Une première borne de connexion 122A de l'organe 114 est analogue à la première borne de connexion 104A de la cellule 98. Une deuxième borne de connexion 122B de l'organe 114 est analogue à la deuxième borne de connexion 104B de la cellule 98.

Un premier bras 116A comprend deux premières diodes 124 connectées en série par leur cathode respective en un premier point de connexion 126. Un deuxième bras 116B comprend deux deuxièmes diodes 128 connectées en série par leur anode respective en un deuxième point de connexion 130.

Le collecteur, respectivement l'émetteur du transistor IGBT 118 est connecté au premier point de connexion 126, respectivement au deuxième point de connexion 130. La varistance 120 est connectée en parallèle du transistor IGBT 118.

En variante ou en complément, chaque varistance 100, 120 est remplacée par tout composant électrique non-linéaire, tel qu'une diode trisil, une diode transil, un fusible de bas calibre en courant, une résistance métallique non linéaire, une résistance à coefficient de température positive, ou un composant formé d'une combinaison de ces éléments. En variante encore, chaque varistance 100, 120 est remplacée par un ensemble formé d'un composant électrique non linéaire du type précité et d'un condensateur d'aide à la commutation, connecté en parallèle de ce composant..

En variante ou en complément, chaque transistor IGBT 108, 112, 118 est remplacé par tout composant électronique semi-conducteur comprenant une électrode de commande et deux électrodes de conduction, tel qu'un transistor bipolaire, un transistor à effet de champ, un thyristor, un thyristor à extinction par la gâchette, un thyristor IGCT (de l'anglais Insulated Gate-Commutated Thyristor), ou un thyristor MCT (de l'anglais MOS Controlled Thyristor) par exemple.

En variante, chaque cellule 98 est remplacée par un interrupteur à coupure assistée hybride 54. Selon cette variante de réalisation, la première borne de connexion 63A de l'interrupteur 54 est analogue à la première borne de connexion 104A de la cellule 98 et la deuxième borne de connexion 63B de l'interrupteur 54 est analogue à la deuxième borne de connexion 104B de la cellule 98.

Selon ce deuxième mode de réalisation, les moyens de commande 48 comportent en outre avantageusement trois modules 134 de détection d'une surintensité électrique. Comme représenté sur la figure 5, chaque module 134 est relié au processeur 74 d'une part, et à un organe de mesure 44 d'autre part.

Chaque module 134 est propre à déterminer le signe des signaux I_{mesU}, I_{mesV}, I_{mesW}, D_{mesU}, D_{mesV}, D_{mesW} fournis par l'organe de mesure 44 associé. Chaque module 134 est propre en outre à comparer le signe du signal I_{mesU}, I_{mesV}, I_{mesW} fourni par l'organe de mesure 44 associé au signe du signal D_{mesU}, D_{mesV}, D_{mesW} fourni par ce même organe de mesure 44. Chaque module 134 est également propre à acquérir l'état instantané des premiers interrupteurs 37 de la branche de commutation 30 associée. Chaque module 134 est propre en outre à fournir au processeur 74 un signal I_{détecU}, I_{détecV}, I_{détecW} apte à prendre deux valeurs distinctes. Une des deux valeurs de chaque signal I_{détecU}, I_{détecV}, I_{détecW} indique un fonctionnement normal de la branche de commutation 30 associée. L'autre valeur de chaque signal I_{détecU}, I_{détecV}, I_{détecW} indique la détection d'une surintensité d'un courant électrique circulant dans au moins une des diodes 38 de la branche de commutation 30 associée.

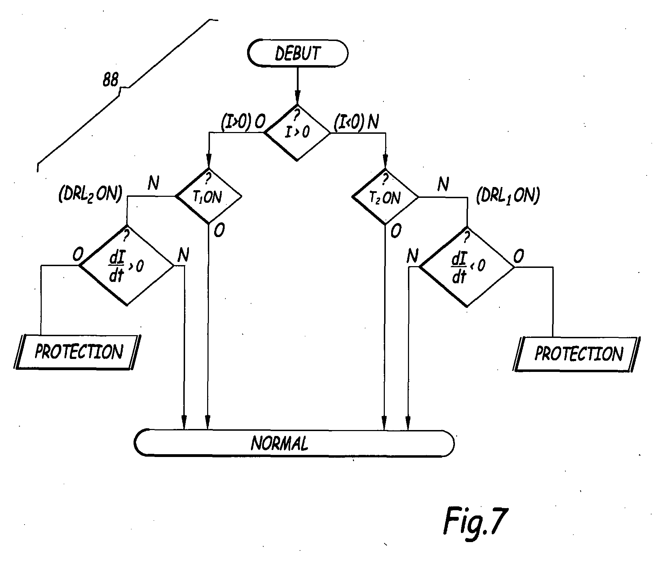

Chaque module 134 est par exemple formé d'un module programmé et / ou analogique et est propre à mettre en oeuvre les opérations figurant dans l'organigramme de la figure 7, comme détaillé par la suite.

Le processeur 74 est propre à transmettre un ordre de commande à l'organe de commande 78, l'ordre de commande étant propre à prendre deux valeurs distinctes. La valeur de l'ordre de commande est déterminée par l'application d'une fonction logique « OU » aux trois signaux I_{détecU}, I_{détecV}, I_{détecW}. La première valeur de l'ordre de commande correspond par exemple à une commande d'ouverture d'un des deuxièmes interrupteurs électroniques 96, la deuxième valeur correspondant à une commande de fermeture de l'ensemble des deuxièmes interrupteurs électroniques 96. En variante, la première valeur de l'ordre de commande correspond à une commande d'ouverture simultanée des trois deuxièmes interrupteurs électroniques 96.

L'organe de commande 78 est propre à transmettre un signal de commande à chaque deuxième interrupteur électronique 96.

Le fonctionnement du dispositif de protection 21 selon le deuxième mode de réalisation va désormais être expliqué.

On considère par la suite la liaison filaire 35U, ainsi que la branche de commutation 30, le deuxième interrupteur 96, l'organe de mesure 44 et le module 134 associés à cette liaison filaire 35U.

Au cours de l'étape initiale 84, l'organe 44 mesure l'intensité du courant circulant dans la liaison filaire 35U, ainsi que la dérivée de cette intensité.

Au cours de l'étape 86 suivante, l'organe de mesure 44 transmet le signal I_{mesU} et le signal D_{mesU} au module 134.

Au cours d'une étape suivante, les moyens de commande 48 commandent le deuxième interrupteur électronique 96 en fonction de la valeur des signaux I_{mesU} et D_{mesU}.

Plus particulièrement, au cours de la première sous-étape 88 illustrée sur la figure 7, le module 134 détermine le signe du signal I_{mesU} et le signe du signal D_{mesU}. Le module 134 acquiert en outre l'état instantané des premiers interrupteurs 37 de la branche de commutation 30.

Sur la figure 7, le premier interrupteur 37 de la première demi-branche 32A est nommé « interrupteur T1 », le premier interrupteur 37 de la deuxième demi-branche 32B est nommé « interrupteur T2 », la diode 38 de la première demi-branche 32A est nommée « diode DRL1 » et la diode 38 de la deuxième demi-branche 32B est nommée « diode DRL2 ». En outre, sur cette figure, le signal I_{mesU} est nommé « I », et le signal D_{mesU} est nommé « dl/dt ».

Si le signe du signal I_{mesU} est positif, et si l'interrupteur T1 est à l'état bloqué, le module 134 compare le signe du signal I_{mesU} au signe du signal D_{mesU}. Si les signaux I_{mesU} et D_{mesU} sont de même signe, autrement dit si le signal D_{mesU} est de signe positif, le module 134 transmet au processeur 74 le signal I_{détecU}, dont la valeur indique la détection d'une surintensité d'un courant électrique circulant au moins dans la diode DRL2. Le processeur 74 transmet alors l'ordre de commande d'ouverture du deuxième interrupteur 96 à l'organe de commande 78.

Si le signe du signal I_{mesU} est positif et que l'interrupteur T1 est à l'état passant, ou si le signe du signal I_{mesU} est positif, que l'interrupteur T1 est à l'état bloqué et que les signaux I_{mesU} et D_{mesU} sont de signe opposé, le module 134 transmet au processeur 74 le signal I_{détecU}, dont la valeur indique un fonctionnement normal de la branche de commutation 30.

Si le signe du signal I_{mesU} est négatif, et si l'interrupteur T2 est à l'état bloqué, le module 134 compare le signe du signal I_{mesU} au signe du signal D_{mesU}. Si les signaux I_{mesU} et D_{mesU} sont de même signe, autrement dit si le signal D_{mesU} est de signe négatif, le module 134 transmet au processeur 74 le signal I_{détecU}, dont la valeur indique la détection d'une surintensité d'un courant électrique circulant au moins dans la diode DRL1. Le processeur 74 transmet alors l'ordre de commande d'ouverture du deuxième interrupteur 96 à l'organe de commande 78.

Si le signe du signal I_{mesU} est négatif et que l'interrupteur T2 est à l'état passant, ou si le signe du signal I_{mesU} est négatif, que l'interrupteur T2 est à l'état bloqué et que les signaux I_{mesU} et D_{mesU} sont de signe opposé, le module 134 transmet au processeur 74 le signal I_{détecU}, dont la valeur indique un fonctionnement normal de la branche de commutation 30.

Au cours de la seconde sous-étape 90, si la valeur du signal I_{détecU} indique la détection d'une surintensité d'un courant électrique, l'organe de commande 78 émet le signal de commande d'ouverture à destination du deuxième interrupteur 96. Sous l'action du signal de commande, le deuxième interrupteur 96 passe alors de son état passant à son état bloqué. Le courant de défaut ne circule alors plus dans aucune des deux diodes 38 de la branche 30. En outre, au cours de cette même seconde sous-étape 90, l'organe de commande 78 émet un signal d'ouverture forcée à destination des premiers interrupteurs électroniques 37 de la branche de commutation 30.

Dans la variante selon laquelle la première valeur de l'ordre de commande correspond à une commande d'ouverture simultanée des trois deuxièmes interrupteurs électroniques 96, lors de la seconde sous-étape étape 90, l'organe de commande 78 transmet à chacun des trois deuxièmes interrupteurs électroniques 96 un signal de commande d'ouverture. Sous l'action du signal de commande, les trois deuxièmes interrupteurs électroniques 96 passent alors simultanément de leur état passant à leur état bloqué. Le courant de défaut ne circule alors plus dans aucune des diodes 38 de l'onduleur 16. En outre, au cours de cette même seconde sous-étape 90, l'organe de commande 78 émet un signal d'ouverture forcée à destination de chacun des premiers interrupteurs électroniques 37 de l'onduleur 16.

En variante non représentée, les moyens de commande 48 ne comportent pas de modules de détection 134 et les organes de mesure 44 sont reliés directement au processeur 74. Selon cette variante, la mémoire 76 est propre à stocker une valeur d'intensité de référence, par exemple une valeur d'intensité sensiblement égale à la valeur crête de l'intensité du courant nominal propre à circuler dans chaque premier interrupteur 37. En outre, le processeur 74 est propre à comparer la valeur de chaque signal I_{mesU}, I_{mesV}, I_{mesW} à la valeur d'intensité de référence et à transmettre l'ordre de commande à l'organe de commande 78. La valeur de l'ordre de commande est déterminée par le résultat de la comparaison entre chaque signal I_{mesU}, I_{mesV}, I_{mesW} et l'intensité de référence. Par exemple, la valeur de l'ordre de commande est égale à la première valeur si la valeur d'un des signaux I_{mesU}, I_{mesV}, I_{mesW} est supérieure à la valeur de l'intensité de référence. En fonctionnement, lors de la première sous-étape 88, le processeur 74 compare la valeur du signal I_{mesU} à la valeur de référence stockée dans la mémoire 76. Si la valeur du signal I_{mesU} est supérieure à la valeur de l'intensité de référence, le processeur 74 transmet à l'organe de commande 78 l'ordre de commande d'ouverture du deuxième interrupteur 96 associé à la liaison filaire 35U. Le reste du fonctionnement du dispositif de protection 21 selon cette variante de réalisation est analogue à celui du dispositif de protection 21 selon l'exemple de réalisation du deuxième mode précédemment décrit.

Dans les différentes variantes du deuxième mode de réalisation décrites ci-dessus, seul un organe de mesure 44 est nécessaire par phase du courant de sortie de l'onduleur 16. Ceci permet de réduire les coûts de réalisation, notamment par rapport au troisième mode de réalisation décrit par la suite. En outre, via le signal de mesure qu'il fournit, chaque organe de mesure 44 permet la détection, pour chaque diode 38 de la branche 30 associée, d'une surintensité éventuelle du courant circulant au sein de cette diode 38. Par ailleurs, les signaux D_{mesU}, D_{mesV}, D_{mesW} ne sont pas perturbés par les fronts de commutation des diodes 38, contrairement au troisième mode de réalisation décrit par la suite.

En variante, les moyens de mesure 20 comprennent un nombre N3 d'organes de mesure 44, où N3 est le nombre de demi-branches de commutation 32A, 32B. Les N3 organes de mesure 44 sont représentés en traits pointillés sur la figure 5. Chaque organe de mesure 44 est agencé au niveau d'une demi-branche de commutation 32A, 32B, sur la connexion antiparallèle d'une diode 38 respective. Selon cette variante de réalisation, chaque organe de mesure 44 est propre à mesurer l'intensité du courant circulant dans la diode 38 associée. En complément, chaque organe de mesure 44 est en outre avantageusement propre à mesurer la dérivée de l'intensité du courant circulant dans la diode 38 associée. Les moyens de mesure 20 sont ainsi propres à réaliser une mesure directe d'un courant propre à circuler dans chaque diode 38 de chaque branche 30. Les moyens de commande 48 comprennent avantageusement, selon cette variante de réalisation, N3 modules 134 de détection d'une surintensité électrique, chaque module 134 étant relié au processeur 74 d'une part, et à un organe de mesure 44 d'autre part. Chaque module 134 est propre à fournir au processeur 74 un signal apte à prendre deux valeurs distinctes. Une des deux valeurs de chaque signal indique un fonctionnement normal de la demi-branche de commutation 32A, 32B associée. L'autre valeur de chaque signal indique la détection d'une surintensité d'un courant électrique circulant dans la diode 38 associée. Le fonctionnement du dispositif de protection 21 selon cette variante de réalisation est analogue à celui du dispositif de protection 21 selon les exemples de réalisation du deuxième mode précédemment décrits.

En variante, les moyens de mesure 20 comprennent un unique organe de mesure 44 analogue à celui du premier mode de réalisation, et représenté en traits pointillés sur la figure 5. Selon cette variante, les moyens de commande 48 ne comportent pas de modules 134. Le fonctionnement de l'organe de mesure 44 et des moyens de commande 48 associés ayant été décrit précédemment, celui-ci ne sera pas décrit plus en détail pour cette variante de réalisation.

Les avantages de ce deuxième mode de réalisation du système de conversion 10 sont identiques, en ce qui concerne le dispositif de protection 21, à ceux du premier mode de réalisation, et ne sont donc pas décrits à nouveau.

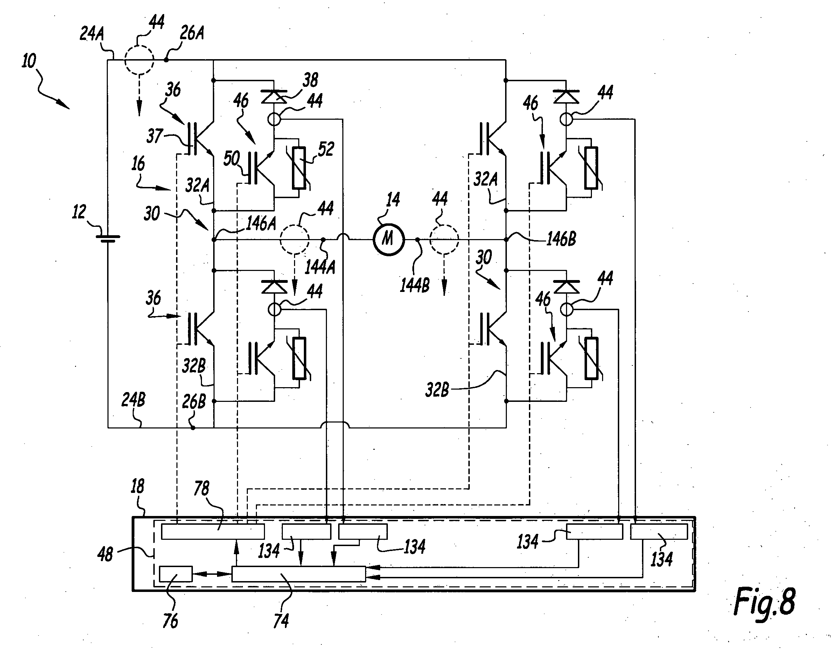

La figure 8 illustre un troisième mode de réalisation de l'invention pour lequel les éléments analogues au premier mode de réalisation, décrit précédemment, sont repérés par des références identiques, et ne sont donc pas décrits à nouveau.

A la différence des premier et deuxième modes de réalisation, la charge 14 est un moteur électrique à courant continu. En outre, selon cet exemple de réalisation, le convertisseur 16 est un hacheur de tension propre à convertir une tension continue d'entrée en une tension continue de sortie, et le système de conversion 10 est un système de conversion d'une tension continue d'entrée en une tension continue de sortie. Plus particulièrement, selon cet exemple de réalisation, le convertisseur 16 est un hacheur de tension quatre quadrants à commande en pont complet, connu en soi.

Le hacheur de tension 16 comporte une borne positive d'entrée 26A, une borne négative d'entrée 26B, une première borne de sortie 144A et une deuxième borne de sortie 144B.

Le hacheur de tension 16 comporte de façon connue, pour chaque borne de sortie 144A, 144B une branche de commutation 30 connectée entre les deux bornes d'entrée 26A, 26B. Chaque branche de commutation 30 comprend deux demi-branches de commutation 32A, 32B reliées en série en une borne intermédiaire 146A, 146B respective. Le hacheur de tension 16 comporte ainsi deux bornes de sortie intermédiaires 146A, 146B.

Les moyens de mesure 20 comprennent quatre organes de mesure 44. Chaque organe de mesure 44 est agencé au niveau d'une demi-branche de commutation 32A, 32B, sur la connexion antiparallèle d'une diode 38 respective.

Chaque organe de mesure 44 est propre à mesurer l'intensité du courant circulant dans la diode 38 associée. En complément, chaque organe de mesure 44 est en outre avantageusement propre à mesurer la dérivée de l'intensité du courant circulant dans la diode 38 associée.

En variante, les moyens de mesure 20 comprennent un organe de mesure 44, représenté en traits pointillés à gauche de la figure 8. L'organe de mesure 44 est agencé entre la source 12 de courant continu et la borne positive d'entrée 26A, sur le bus positif 24A de tension continue. En variante non représentée, l'organe de mesure 44 est agencé entre la source 12 de courant continu et la borne négative d'entrée 26B, sur le bus négatif 24B de tension continue.

En variante encore, les moyens de mesure 20 comprennent deux organes de mesure 44, représentés en traits pointillés au centre de la figure 8. Chaque organe de mesure 44 est agencé entre une borne de sortie intermédiaire 146A, 146B respective et une borne de sortie 144A, 144B associée.

Le dispositif de protection 21 comprend quatre deuxièmes interrupteurs électroniques 46. Plus précisément, le dispositif de protection 21 comprend, pour chaque branche de commutation 30, deux deuxièmes interrupteurs électroniques 46, chaque deuxième interrupteur électronique 46 étant connecté en série de la diode 38 d'une demi-branche de commutation 32A, 32B respective.

En variante non représentée, le dispositif de protection 21 comprend deux deuxièmes interrupteurs électroniques 46. Plus précisément, selon cette variante de réalisation, le dispositif de protection 21 comprend, pour chaque branche de commutation 30, un deuxième interrupteur électronique 46. Chaque deuxième interrupteur électronique 46 est par exemple connecté en série de la diode 38 d'une des premières demi-branches de commutation 32A. En variante, chaque deuxième interrupteur électronique 46 est connecté en série de la diode 38 d'une des deuxièmes demi-branches de commutation 32B.

Dans l'exemple de réalisation de la figure 8, les moyens de commande 48 comprennent avantageusement quatre modules 134 de détection d'une surintensité électrique, chaque module 134 étant relié au processeur 74 d'une part, et à un organe de mesure 44 d'autre part. Chaque module 134 est propre à fournir au processeur 74 un signal apte à prendre deux valeurs distinctes. Une des deux valeurs de chaque signal indique un fonctionnement normal de la demi-branche de commutation 32A, 32B associée. L'autre valeur de chaque signal indique la détection d'une surintensité d'un courant électrique circulant dans la diode 38 associée.

En variante non représentée, les moyens de commande 48 ne comportent pas de modules de détection 134 et les organes de mesure 44 sont reliés directement au processeur 74, comme décrit précédemment.

Le fonctionnement de ce troisième mode de réalisation du dispositif de protection 21 est similaire à celui du deuxième mode de réalisation en ce qui concerne les moyens de mesure 20 et les moyens de commande 48, et à celui du premier mode de réalisation en ce qui concerne les deuxièmes interrupteurs électroniques 46. Le fonctionnement de ce troisième mode de réalisation n'est donc pas décrit plus en détail.

Les avantages de ce troisième mode de réalisation du système de conversion 10 sont identiques, en ce qui concerne le dispositif de protection 21, à ceux du premier mode de réalisation, et ne sont donc pas décrits à nouveau.

On conçoit ainsi que le dispositif de protection selon l'invention permet de protéger chaque diode de chaque branche contre une surintensité électrique, tout en présentant une vitesse de déclenchement améliorée et en conservant sensiblement le rendement des branches.

Le dispositif de protection selon l'invention permet par ailleurs de remplacer avantageusement les contacteurs classiques de type « jour-nuit » utilisés du côté du réseau électrique dans les systèmes de conversion d'énergie photovoltaïque, ces contacteurs ayant pour but de protéger l'onduleur de tension lorsque la tension continue d'entrée est inférieure à la tension crête du réseau. Ceci permet de diminuer les coûts de production liés à la présence de tels contacteurs et aussi d'augmenter l'endurance de manoeuvre.

En outre, le dispositif de protection selon l'invention peut avantageusement être utilisé en tant que moyen d'îlotage de l'onduleur de tension. Autrement dit, dans le cadre d'une protection anti-îlotage mise en place du côté du réseau électrique, le dispositif de protection peut jouer le rôle d'un organe d'ouverture de la chaîne d'alimentation électrique, permettant ainsi de déconnecter la source d'alimentation électrique du réseau.

L'utilisation du dispositif de protection selon l'invention rend en outre possible l'utilisation d'un sectionneur pour mettre en sécurité la chaîne d'alimentation électrique. Le dispositif de protection selon l'invention permet alors d'annuler avantageusement, avant l'ouverture du sectionneur, tout courant de défaut détecté par l'onduleur de tension, ce sans dégradation du sectionneur.

Dans les trois modes de réalisation décrits précédemment, les moyens de mesure 20 sont propres à mesurer l'intensité d'un courant circulant dans un des bus 24A, 24B de tension continue, ou l'intensité et/ou la dérivée de l'intensité d'un courant circulant dans chaque liaison filaire 35U, 35V, 35W, ou l'intensité et/ou la dérivée de l'intensité d'un courant circulant dans chaque diode 38. En variante, les moyens de mesure 20 sont propres à mesurer une différence de potentiel entre la tension des bus 24A, 24B de tension continue et la tension crête de la charge 14. Cette mesure est une mesure indirecte d'un courant propre à circuler dans chaque diode 38 de chaque branche 30. En effet, si la tension des bus 24A, 24B, correspondant à la tension d'entrée du convertisseur 16, est inférieure à la tension crête de la charge 14, cela signifie qu'un courant de défaut circule dans au moins deux diodes 38 appartenant à deux branches de commutation 30 distinctes.

En variante encore, chaque dérivée de l'intensité d'un courant précitée n'est pas mesurée par les moyens de mesure 20 mais est déterminée par le processeur 74 à partir de la mesure de l'intensité de courant associée.

La description des deux premiers modes de réalisation a été faite en référence à des onduleurs « mono-niveaux ». Il est cependant entendu que l'invention s'applique de la même manière à des onduleurs « multi-niveaux », par exemple des onduleurs présentant une topologie du type pilotée par le neutre, également appelée topologie NPP (de l'anglais Neutral Point Piloted), ou encore une topologie du type clampée par le neutre, également appelée topologie NPC (de l'anglais Neutral Point Clamped).

Plus généralement, l'invention s'applique à tout système de conversion d'une première tension électrique en une deuxième tension électrique de type « abaisseur », c'est-à-dire tel qu'en régime nominal de fonctionnement la tension d'entrée du système est supérieure à la tension de sortie du système.

## Revendications

1. Dispositif de protection (21), contre une surintensité électrique, d'au moins une branche électronique de commutation (30) d'un système de conversion électrique (10), la ou chaque branche (30) comprenant deux demi-branches de commutation (32A, 32B) reliées en série en une borne intermédiaire (34U, 34V, 34W ; 146A, 146B), au moins une demi-branche (32A, 32B) comportant au moins un organe de commutation (36), le ou chaque organe de commutation (36) comprenant un premier interrupteur électronique commandable (37) et une diode (38) connectée en antiparallèle dudit premier interrupteur électronique (37),
**caractérisé en ce qu'**il comporte, pour la ou chaque branche de commutation (30) :
- au moins un deuxième interrupteur électronique (46), le ou chaque deuxième interrupteur électronique (46) étant propre à passer, sous l'action d'une commande, d'un état passant à un état bloqué pour la protection de ladite diode (38) contre la surintensité,
le ou chaque deuxième interrupteur électronique (46) étant connecté à une électrode de ladite diode (38) connectée en antiparallèle du premier interrupteur électronique (37), en série de ladite diode (38) respective et en antiparallèle dudit premier interrupteur électronique (37) respectif,
- des moyens (20) de mesure d'au moins une grandeur relative à un courant propre à circuler dans la ou chaque diode (38) de la branche (30), et
- des moyens (48) de commande du ou de chaque deuxième interrupteur électronique (46), en fonction de la grandeur mesurée par les moyens de mesure (20).

2. Dispositif (21) selon la revendication 1, **caractérisé en ce que** le ou chaque deuxième interrupteur électronique (46) comporte un composant électronique semi-conducteur de commutation (50), tel qu'un transistor, et un composant électrique non-linéaire (52) connecté en parallèle dudit composant semi-conducteur de commutation (50).

3. Dispositif de protection (21), contre une surintensité électrique, d'au moins une branche électronique de commutation (30) d'un système de conversion électrique (10), la ou chaque branche (30) comprenant deux demi-branches de commutation (32A, 32B) reliées en série en une borne intermédiaire (34U, 34V, 34W ; 146A, 146B), au moins une demi-branche (32A, 32B) comportant au moins un organe de commutation (36), le ou chaque organe de commutation (36) comprenant un premier interrupteur électronique commandable (37) et une diode (38) connectée en antiparallèle dudit premier interrupteur électronique (37),
**caractérisé en ce qu'**il comporte, pour la ou chaque branche de commutation (30) :
- au moins un deuxième interrupteur électronique (96), le ou chaque deuxième interrupteur électronique (96) étant propre à passer, sous l'action d'une commande, d'un état passant à un état bloqué pour la protection de ladite diode (38) contre la surintensité,
le deuxième interrupteur électronique (96) étant connecté d'une part à la borne intermédiaire (34U, 34V, 34W ; 146A, 146B) de cette branche de commutation (30), et propre à être connecté d'autre part à une borne de sortie (28U, 28V, 28W) du système de conversion électrique (10),
- des moyens (20) de mesure d'au moins une grandeur relative à un courant propre à circuler dans la ou chaque diode (38) de la branche (30), et
- des moyens (48) de commande du ou de chaque deuxième interrupteur électronique (96), en fonction de la grandeur mesurée par les moyens de mesure (20).

4. Dispositif (21) selon la revendication 3, **caractérisé en ce que** le ou chaque deuxième interrupteur électronique (96) comporte un composant électrique non-linéaire (100), et deux bras (102A, 102B) connectés chacun en parallèle du composant électrique non-linéaire (100), chaque bras (102A, 102B) comportant un composant électronique semi-conducteur de commutation (108, 112), tel qu'un transistor, et une diode (106, 110) connectée en série du composant semi-conducteur de commutation (108, 112).

5. Dispositif (21) selon la revendication 3, **caractérisé en ce que** le ou chaque deuxième interrupteur électronique (96) comporte deux bras (116A, 116B), un premier bras (116A) comprenant deux diodes (124) connectées en série par leur cathode respective en un premier point de connexion (126), un deuxième bras (116B) comprenant deux diodes (128) connectées en série par leur anode respective en un deuxième point de connexion (130), et **en ce que** le ou chaque deuxième interrupteur électronique (96) comporte en outre un composant électrique non-linéaire (120) connecté entre les premier et deuxième points de connexion (126, 130), et un composant électronique semi-conducteur de commutation (118), tel qu'un transistor, le composant électronique semi-conducteur de commutation (118) étant connecté en parallèle du composant électrique non-linéaire (120).

6. Dispositif (21) selon la revendication 1 ou 3, **caractérisé en ce que** le ou chaque deuxième interrupteur électronique (46 ; 96) comporte deux bras (56A, 56B), un premier bras (56A) comprenant deux diodes (64) connectées en série par leur cathode respective en un premier point de connexion (66), un deuxième bras (56B) comprenant deux diodes (68) connectées en série par leur anode respective en un deuxième point de connexion (70), et **en ce que** le ou chaque deuxième interrupteur électronique (46 ; 96) comporte en outre un composant électrique non-linéaire (60) connecté entre les premier et deuxième points de connexion (66, 70), un contacteur mécanique (62), connecté en parallèle du composant électrique non-linéaire (60) et un composant électronique semi-conducteur de commutation (58), tel qu'un transistor, connecté en parallèle du composant électrique non-linéaire (60).

7. Système (10) de conversion d'une première tension électrique en une deuxième tension électrique, comprenant :
- un convertisseur (16) d'une première tension électrique en une deuxième tension électrique, le convertisseur (16) comprenant au moins deux bornes d'entrée (26A, 26B), au moins deux bornes de sortie (28U, 28V, 28W ; 144A, 144B), et au moins une branche électronique de commutation (30) connectée entre les deux bornes d'entrée (26A, 26B), la ou chaque branche (30) comprenant deux demi-branches de commutation (32A, 32B) reliées en série en une borne intermédiaire (34U, 34V, 34W ; 146A, 146B), au moins une demi-branche (32A, 32B) comportant au moins un organe de commutation (36), le ou chaque organe de commutation (36) comprenant un premier interrupteur électronique commandable (37) et une diode (38) connectée en antiparallèle dudit premier interrupteur électronique (37),
- un dispositif (18) de commande du ou de chaque premier interrupteur électronique (37) de la ou de chaque branche (30), et
- un dispositif (21) de protection, contre une surintensité électrique, de la ou de chaque branche (30),
**caractérisé en ce que** le dispositif de protection (21) est conforme à l'une quelconque des revendications précédentes.

8. Procédé de pilotage d'un dispositif de protection (21), le dispositif de protection (21) étant propre à protéger, contre une surintensité électrique, au moins une branche électronique de commutation (30) d'un système de conversion électrique (10), la ou chaque branche (30) comprenant deux demi-branches de commutation (32A, 32B) reliées en série en une borne intermédiaire (34U, 34V, 34W ; 146A, 146B), au moins une demi-branche (32A, 32B) comportant au moins un organe de commutation (36), le ou chaque organe de commutation (36) comprenant un premier interrupteur électronique commandable (37) et une diode (38) connectée en antiparallèle dudit premier interrupteur électronique (37), le dispositif de protection (21) comprenant, pour la ou chaque branche de commutation (30), au moins un deuxième interrupteur électronique (46 ; 96),
le ou chaque deuxième interrupteur électronique (46 ; 96) étant connecté à la borne intermédiaire (34U, 34V, 34W ; 146A, 146B) et à une borne de sortie (28U, 28V, 28W) du système de conversion électrique (10),
ou bien connecté à une électrode de ladite diode (38) connectée en antiparallèle du premier interrupteur électronique (37), en série de ladite diode (38) et en antiparallèle dudit premier interrupteur électronique (37),
le ou chaque deuxième interrupteur électronique (46 ; 96) étant propre à passer, sous l'action d'une commande, d'un état passant à un état bloqué pour la protection de ladite diode (38) contre la surintensité,
le procédé étant **caractérisé en ce qu'**il comprend, pour le ou chaque deuxième interrupteur électronique (46 ; 96), les étapes suivantes :
- la mesure (84), pour la ou chaque diode (38) propre à être protégée par ledit deuxième interrupteur (46 ; 96), d'au moins une grandeur relative au courant circulant dans cette diode (38),
- la commande du ou de chaque deuxième interrupteur électronique (46 ; 96) en fonction de la grandeur mesurée par les moyens de mesure (20).

9. Procédé selon la revendication 8, **caractérisé en ce que** l'étape de commande du ou de chaque deuxième interrupteur électronique (46 ; 96) comprend :
- la comparaison (88) de la ou chaque mesure reçue (Iₘₑₛ₊ ; I_{mesU}, I_{mesV}, I_{mesW}, D_{mesU} , D_{mesV}, D_{mesW}) à une grandeur de référence prédéterminée ou à une autre mesure reçue (Iₘₑₛ₊ ; I_{mesU}, I_{mesV}, I_{mesW}, D_{mesU}, D_{mesV}, D_{mesW}), et
- l'émission (90) d'un signal de commande d'ouverture ou de fermeture du, des, ou d'un des deuxième(s) interrupteur(s) électronique(s) (46 ; 96) en fonction du résultat de la comparaison.

10. Procédé selon la revendication 9, **caractérisé en ce que**, lors de l'étape de mesure (84), la mesure est une mesure directe de l'intensité du courant circulant dans la ou chaque diode (38) de la ou de chaque branche (30), **en ce que** l'étape de comparaison consiste en la comparaison entre la valeur de l'intensité mesurée du courant circulant dans au moins une des diodes propres à être protégée par ledit deuxième interrupteur (46 ; 96) et la valeur d'une intensité de référence, et **en ce que**, lors de l'étape (90) d'émission d'un signal de commande, le signal de commande est un signal de commande d'ouverture lorsque l'écart entre l'intensité mesurée du courant circulant dans ladite au moins une diode (38) et l'intensité de référence est supérieur à un écart prédéterminé.

11. Procédé selon la revendication 9, **caractérisé en ce que**, lors de l'étape de mesure (84), la mesure est une mesure de l'intensité du courant circulant dans la ou chaque diode (38) de la ou de chaque branche (30), via une mesure de l'intensité d'un courant principal comprenant le courant circulant dans ladite diode (38), et **en ce que** l'étape de comparaison consiste en une comparaison entre la valeur de l'intensité du courant principal mesuré et une valeur nulle.

12. Procédé selon la revendication 10 ou 11, **caractérisé en ce que**, lors de l'étape de mesure (84), la mesure est une mesure de l'intensité du courant circulant dans la ou chaque diode (38) de la ou de chaque branche (30) et de la dérivée de l'intensité du courant circulant dans la ou chaque diode (38) de la ou de chaque branche (30), **en ce que** l'étape de comparaison consiste en une comparaison entre le signe de la valeur de l'intensité du courant circulant dans au moins une des diodes (38) propres à être protégée par ledit deuxième interrupteur (46 ; 96) et le signe de la valeur de la dérivée de l'intensité du courant circulant dans cette diode (38), et **en ce que**, lors de l'étape (90) d'émission d'un signal de commande, le signal de commande est un signal de commande d'ouverture, lorsque la valeur de l'intensité du courant circulant dans ladite au moins une diode (38) et la valeur de la dérivée de cette intensité sont de même signe.

13. Procédé selon l'une quelconque des revendications 9 à 12, **caractérisé en ce que** le signal de commande d'ouverture est transmis au ou à chaque deuxième interrupteur électronique (46 ; 96), et est propre à commander l'ouverture simultanée de l'ensemble des deuxièmes interrupteurs électroniques (46 ; 96) du système de conversion (10).

14. Procédé selon l'une quelconque des revendications 9 à 13, **caractérisé en ce que**, lorsque le signal de commande du, des, ou d'un des deuxième(s) interrupteur(s) électronique(s) (46 ; 96) est un signal de commande d'ouverture, l'étape de commande comprend en outre l'émission d'un signal de commande d'ouverture forcée du, des, ou d'un des premier(s) interrupteur(s) électronique(s) (37).

## Patentansprüche

1. Vorrichtung (21) zum Schutz gegen einen elektrischen Überstrom mindestens eines elektronischen Schaltzweigs (30) eines elektrischen Wandelsystems (10), wobei der oder jeder Zweig (30) zwei Schalthalbzweige (32A, 32B), die seriell an einem Zwischenanschluss (34U, 34V, 34W; 146A, 146B) verbunden sind, aufweist, wobei mindestens ein Halbzweig (32A, 32B) mindestens ein Schaltorgan (36) aufweist, wobei das oder jedes Schaltorgan (36) einen ersten steuerbaren elektronischen Schalter (37) und eine Diode (38) aufweist, die zu dem ersten elektronischen Schalter (37) antiparallel geschaltet ist,
dadurch charakterisiert, dass sie aufweist, für den oder jeden Schaltzweig (30):
- mindestens einen zweiten elektronischen Schalter (46), wobei der oder jeder zweite elektronische Schalter (46) dazu geeignet ist, unter der Einwirkung eines Befehls zum Schutz der Diode (38) gegen Überstrom von einem Durchlasszustand in einen Blockierzustand zu schalten,
wobei der oder jeder zweite elektronische Schalter (46) mit einer Elektrode der antiparallel zum ersten elektronischen Schalter (37) geschalteten Diode (38), seriell zu der jeweiligen Diode (38) und antiparallel zu dem jeweiligen ersten elektronischen Schalter (37) verbunden ist,
- Mittel (20) zum Messen mindestens einer Größe relativ zu einem Strom, der durch die oder jede Diode (38) des Zweigs (30) zirkulieren kann und
- Mittel (48) zum Steuern des oder jedes zweiten elektronischen Schalters (46) basierend auf der von den Mitteln zum Messen (20) gemessenen Größe.

2. Vorrichtung (21) gemäß Anspruch 1, dadurch charakterisiert, dass der oder jeder zweite elektronische Schalter (46) eine elektronische Halbleiterschaltkomponente (50) wie einen Transistor und eine nichtlineare elektrische Komponente (52), die parallel zu der elektronischen Halbleiterschaltkomponente (50) geschaltet ist, aufweist.

3. Vorrichtung (21) zum Schutz gegen einen elektrischen Überstrom mindestens eines elektronischen Schaltzweigs (30) eines elektrischen Wandelsystems (10), wobei der oder jeder Zweig (30) zwei Schalthalbzweige (32A, 32B), die seriell an einem Zwischenanschluss (34U, 34V, 34W; 146A, 146B) verbunden sind, aufweist, wobei mindestens ein Halbzweig (32A, 32B) mindestens ein Schaltorgan (36) aufweist, wobei das oder jedes Schaltorgan (36) einen ersten steuerbaren elektronischen Schalter (37) und eine Diode (38) aufweist, die zu dem ersten elektronischen Schalter (37) antiparallel geschaltet ist,
dadurch charakterisiert, dass sie aufweist, für den oder jeden Schaltzweig (30):
- mindestens einen zweiten elektronischen Schalter (96), wobei der oder jeder zweite elektronische Schalter (96) dazu geeignet ist, unter der Einwirkung eines Befehls zum Schutz der Diode (38) gegen Überstrom von einem Durchlasszustand in einen Blockierzustand zu schalten,
wobei der oder jeder zweite elektronische Schalter (96) einerseits mit dem Zwischenanschluss (34U, 34V, 34W; 146A, 146B) dieses Schaltzweigs (30) verbunden ist und geeignet ist, andererseits mit einem Ausgangsanschluss (28U, 28V, 28W) des elektrischen Wandelsystems (10) verbunden zu werden,
- Mittel (20) zum Messen mindestens einer Größe relativ zu einem Strom, der durch die oder jede Diode (38) des Zweigs (30) zirkulieren kann und
- Mittel (48) zum Steuern des oder jedes zweiten elektronischen Schalters (96) basierend auf der von den Mitteln zum Messen (20) gemessenen Größe.

4. Vorrichtung (21) gemäß Anspruch 3, dadurch charakterisiert, dass der oder jeder zweite elektronische Schalter (96) eine elektrische nichtlineare Komponente (100) und zwei Arme (102A, 102B) aufweist, die jeweils parallel zu der elektrischen nichtlinearen Komponente (100) geschaltet sind, wobei jeder Arm (102A, 102B) eine elektronische Halbleiterschaltkomponente (108, 112) wie einen Transistor und eine Diode (106, 110) aufweist, die seriell zu der elektronischen Halbleiterschaltkomponente (108, 112) geschaltet ist.

5. Vorrichtung (21) gemäß Anspruch 3, dadurch charakterisiert, dass der oder jeder zweite elektronische Schalter (96) zwei Arme (116A, 116B), aufweist, wobei ein erster Arm (116A) zwei mit ihren jeweiligen Kathoden an einem ersten Verbindungspunkt (126) verbundene Dioden aufweist und ein zweiter Arm (116B) zwei mit ihrer jeweiligen Anode an einem zweiten Verbindungspunkt (130) verbundene Dioden aufweist, und dadurch, dass der oder jeder elektronische Schalter (96) außerdem eine nichtlineare elektrische Komponente (120), die zwischen den ersten Verbindungspunkt und den zweiten Verbindungspunkt (126, 130) geschaltet ist und eine elektronische Halbleiterschaltkomponente (118) wie einen Transistor aufweist, wobei die elektronische Halbleiterschaltkomponente (118) parallel zu der nichtlinearen elektrischen Komponente (120) geschaltet ist.

6. Vorrichtung (21) gemäß Anspruch 1 oder 3, dadurch charakterisiert, dass der oder jeder zweite elektronische Schalter (46, 96) zwei Arme (56A, 56B) aufweist, wobei ein erster Arm (56A) zwei Dioden (64) aufweist, die mit ihren jeweiligen Kathoden an einem ersten Verbindungspunkt (66) verbunden sind und ein zweiter Arm (56B) zwei mit ihren jeweiligen Anoden an einem zweiten Verbindungspunkt (70) verbundene Dioden aufweist, und dadurch, dass der oder jeder zweite elektronische Schalter (46, 96) außerdem eine elektronische nichtlineare Komponente (60), die zwischen den ersten Verbindungspunkt und den zweiten Verbindungspunkt (66, 70), einen mechanischen Kontaktgeber (62), der parallel zu der nichtlinearen elektrischen Komponente (60) geschaltet ist, und eine elektronische Halbleiterschaltkomponente (58) wie einen Transistor aufweist, der parallel zu der nichtlinearen elektrischen Komponente (60) geschaltet ist.

7. System (10) zum Wandeln einer ersten elektrischen Spannung in eine zweite elektrische Spannung, aufweisend:
- einen Wandler (16) von einer ersten elektrischen Spannung in eine zweite elektrische Spannung, wobei der Wandler (16) mindestens zwei Eingangsanschlüsse (26A, 26B), mindestens zwei Ausgangsanschlüsse (28U, 28V, 28W; 144A, 144B) und mindestens einen elektronischen Schaltzweig (30) aufweist, der zwischen die Eingangsanschlüsse (26A, 26B) geschaltet ist, wobei der oder jeder Zweite (30) zwei Schalthalbzweige (32A, 32B) aufweist, die seriell an einem Zwischenanschluss (34U, 34V, 34W, 146A, 146B) verbunden sind, wobei mindestens ein Halbzweig (32A, 32B) mindestens ein Schaltorgan (36) aufweist, wobei das oder die Schaltorgane (36) einen ersten steuerbaren elektronischen Schalter (37) und eine Diode (38) aufweisen, die antiparallel zu dem ersten elektronischen Schalter (37) geschaltet ist,
- eine Vorrichtung (18) zum Steuern des oder jeden ersten elektronischen Schalters (37) des oder jedes Zweigs (30) und
- eine Vorrichtung (21) zum Schutz gegen einen elektrischen Überstrom des einen oder jedes Zweigs (30),
dadurch charakterisiert, dass die Vorrichtung zum Schutz (21) gemäß einem der vorhergehenden Ansprüche ist.

8. Verfahren zum Steuern einer Schutzvorrichtung (21), wobei die Schutzvorrichtung zum Schützen gegen einen elektrischen Überstrom mindestens eines elektronischen Schaltzweigs (30) eines elektrischen Wandelsystems (10) geeignet ist, wobei der oder jeder Zweig (30) zwei Schalthalbzweige (32A, 32B), die seriell an einem Zwischenanschluss (34U, 34V, 34W; 146A, 146B) verbunden sind, aufweist, wobei mindestens ein Halbzweig (32A, 32B) mindestens ein Schaltorgan (36) aufweist, wobei das oder jedes Schaltorgan (36) einen ersten steuerbaren elektronischen Schalter (37) und eine Diode (38) aufweist, die zu dem ersten elektronischen Schalter (37) antiparallel geschaltet ist,
wobei die Schutzvorrichtung (21) für den oder jeden Schaltzweig (30) mindestens einen zweiten elektronischen Schalter (46, 96) aufweist,
wobei der oder jeder zweite elektronische Schalter (46,96) mit dem Zwischenanschluss (34U, 34V, 34W; 146A, 146B) und einem Ausgangsanschluss (28U, 28V, 28W) des elektrischen Wandelsystems (10) verbunden ist
beziehungsweise mit einer Elektrode der antiparallel zum ersten elektronischen Schalter (37) geschalteten Diode (38), seriell zu der jeweiligen Diode (38) und antiparallel zu dem jeweiligen ersten elektronischen Schalter (37) verbunden ist, wobei der oder jeder zweite elektronische Schalter (46; 96) dazu geeignet ist, unter der Einwirkung eines Befehls zum Schutz der Diode (38) gegen Überstrom von einem Durchlasszustand in einen Blockierzustand zu schalten,
wobei das Verfahren dadurch charakterisiert ist, dass es für den oder jeden zweiten elektronischen Schalter (46; 96) die folgenden Schritte aufweist:
- das Messen (84), für die oder jede Diode (38), die dazu geeignet ist, von dem zweiten Schalter (46; 96) geschützt zu werden, mindestens einer Größe relativ zu einem Strom, der durch diese Diode (38) zirkuliert,
- das Steuern des oder jedes zweiten elektronischen Schalters (46; 96) basierend auf der von den Mitteln zum Messen (20) gemessenen Größe.

9. Verfahren gemäß Anspruch 8, dadurch charakterisiert, dass der Schritt des Steuerns des einen oder jedes zweiten elektronischen Schalters (46; 96) aufweist:
- den Vergleich (88) der oder jeder empfangenen Messung (Iₘₑₛ₊; I_{mesU}, I_{mesV}, I_{mesW}, D_{mesU}, D_{mesV}, D_{mesW}) mit der Größe einer vorbestimmten Referenz oder mit einer anderen empfangenen Messung (Iₘₑₛ₊; I_{mesU}, I_{mesV}, I_{mesW}, D_{mesU}, D_{mesV}, D_{mesW}) und
- das Aussenden (90) eines Steuersignals zum Öffnen oder zum Schließen des, der oder eines der zweiten elektronische(n) Schalter(s) (46; 96) basierend auf dem Ergebnis des Vergleichs.

10. Verfahren gemäß Anspruch 9, dadurch charakterisiert, dass bei dem Schritt des Messens (84) das Messen ein direktes Messen der Stärke des Stroms ist, der in der oder jeder Diode (38) des oder jedes Zweigs (30) zirkuliert, dadurch, dass der Schritt des Vergleichens aus dem Vergleich zwischen dem gemessenen Wert der Stromstärke des Stroms, der in mindestens einer der Dioden, die dazu geeignet sind, von dem zweiten Schalter (46; 96) geschützt zu werden, zirkuliert, und dem Wert einer Referenzstärke besteht und dadurch, dass bei dem Schritt (90) des Aussendens des Steuersignals das Steuersignal ein Steuersignal zum Öffnen ist, wenn die Abweichung zwischen der gemessenen Stärke des durch die mindestens eine Diode (38) zirkulierenden Stroms und der Referenzstärke größer ist als eine vorbestimmte Abweichung.

11. Verfahren gemäß Anspruch 9, dadurch charakterisiert, dass beim Schritt des Messens (84) das Messen ein Messen der Stärke des Stroms, der durch die oder jede Diode (38) des einen oder jedes Zweigs (30) zirkuliert, über ein Messen der Stärke eines Hauptstroms ist, der den Strom, der durch die Diode (38) zirkuliert, aufweist, ist, und dadurch, dass der Schritt des Vergleichens aus dem Vergleich zwischen dem Wert der gemessenen Stärke des Hauptstroms und eines Nullwerts besteht.

12. Verfahren gemäß Anspruch 10 oder 11, dadurch charakterisiert, dass bei dem Schritt des Messens (84) das Messen ein Messen der Stärke des Stroms, der in der oder jeder Diode (38) des einen oder jedes Zweigs (30) zirkuliert, und der Ableitung der Stärke des Stroms, der in der oder jeder Diode (38) des einen oder jedes Zweigs (30) zirkuliert, ist, dadurch, dass der Schritt des Vergleichens in einem Vergleich zwischen dem Vorzeichen des Werts der Intensität des Stroms, der in mindestens einer Diode (38), die geeignet ist, von dem zweiten Schalter (46; 96) geschützt zu werden, zirkuliert, und dem Vorzeichen des Werts der Ableitung der Stärke des Stroms, der in dieser Diode (38) zirkuliert, besteht und dadurch, dass bei dem Schritt (90) des Aussendens des Steuersignals das Steuersignal ein Steuersignal zum Öffnen ist, wenn der Wert der Intensität des Stroms, der in der mindestens einen Diode (38) zirkuliert und der Wert der Ableitung dieser Intensität das gleiche Vorzeichen haben.

13. Verfahren gemäß einem der Ansprüche 9 bis 12, dadurch charakterisiert dass das Steuersignal zum Öffnen an den oder an jeden zweiten elektronischen Schalter (46; 96) gesendet wird und geeignet ist, das gleichzeitige Öffnen der Menge von zweiten elektronischen Schaltern (46; 96) des Wandelsystems (10) zu steuern.

14. Verfahren gemäß einem der Ansprüche 9 bis 13, dadurch charakterisiert, dass, wenn das Steuersignal des, der oder eines der zweiten elektranische(n) Schalter(s) (46; 96) ein Steuersignal zum Öffnen ist, der Schritt des Steuerns außerdem das Aussenden eines Steuersignals zum erzwungenen Öffnens des, der oder eines der ersten elektronische(n) Schalter(s) (37) ist.

## Claims

1. A device (21) for protecting against an electrical overcurrent, for at least one electronic switching branch (30) of an electrical conversion system (10), the or each branch (30) comprising two switching half-branches (32A, 32B) serially connected at an intermediate terminal (34U, 34V, 34W; 146A, 146B), at least one half-branch (32A, 32B) including at least one switching member (36), the or each switching member (36) comprising a first controllable electronic switch (37) and a diode (38) connected in antiparallel to said first electronic switch (37),
**characterized in that** it includes, for the or each switching branch (30):
- at least one second electronic switch (46), the or each second electronic switch (46) being able to switch, under the action of a controller, from an on state to an off state to protect said diode (38) from the overcurrent,
the or each second electronic switch (46) being connected to an electrode of said diode (38) connected in antiparallel to the first electronic switch (37), serially with said respective diode (38) and in antiparallel to said first respective electronic switch (37),
- measuring means (20) for measuring at least one magnitude relative to a current able to circulate in the or each diode (38) of the branch (30), and
- control means (48) for controlling the or each second electronic switch (46; 96), based on the magnitude measured by the measuring means (20).

2. The device (21) according to claim 1, **characterized in that** the or each second electronic switch (46) includes a semiconductor electronic switching component (50), such as a transistor, and a nonlinear electrical component (52) connected in parallel to said semiconductor switching component (50).

3. A device (21) for protecting against an electrical overcurrent, for at least one electronic switching branch (30) of an electrical conversion system (10), the or each branch (30) comprising two switching half-branches (32A, 32B) serially connected at an intermediate terminal (34U, 34V, 34W; 146A, 146B), at least one half-branch (32A, 32B) including at least one switching member (36), the or each switching member (36) comprising a first controllable electronic switch (37) and a diode (38) connected in antiparallel to said first electronic switch (37),
**characterized in that** it includes, for the or each switching branch (30):
- at least one second electronic switch (96), the or each second electronic switch (96) being able to switch, under the action of a controller, from an on state to an off state to protect said diode (38) from the overcurrent,
the second electronic switch (96) being connected on the one hand to the intermediate terminal (34U, 34V, 34W) of that switching branch (30), and able of being connected on the other hand to an output terminal (28U, 28V, 28W) of the electrical conversion system (10),
- measuring means (20) for measuring at least one magnitude relative to a current able to circulate in the or each diode (38) of the branch (30), and
- control means (48) for controlling the or each second electronic switch (46; 96), based on the magnitude measured by the measuring means (20).

4. The device (21) according to claim 3, **characterized in that** the or each second electronic switch (96) includes a nonlinear electrical component (100), and two arms (102A, 102B) each connected in parallel to the nonlinear electrical component (100), each arm (102A, 102B) including a semiconductor electronic switching component (108, 112), such as a transistor, and a diode (106, 110) serially connected to the semiconductor switching component (108, 112).

5. The device (21) according to claim 3, **characterized in that** the or each second electronic switch (96) includes two arms (116A, 116B), a first arm (116A) comprising two diodes (124) serially connected by their respective cathodes at a first connection point (126), a second arm (116B) comprising two diodes (128) serially connected by their respective anodes at a second connection point (130), and **in that** the or each second electronic switch (96) further includes a nonlinear electrical component (120) connected between the first and second connection points (126, 130), and a semiconductor electronic switching component (118), such as a transistor, the semiconductor electronic switching component (118) being connected in parallel with the nonlinear electrical component (120).

6. The device (21) according to claim 1 or 3, **characterized in that** the or each second electronic switch (46; 96) includes two arms (56A, 56B), a first arm (56A) comprising two diodes (64) serially connected by their respective cathodes at first connection point (66), a second arm (56B) comprising two diodes (68) serially connected by their respective anodes at a second connection point (70), and **in that** the or each second electronic switch (46; 96) further includes a nonlinear electrical component (60) connected between the first and second connection points (66, 70), a mechanical contactor (62), connected in parallel with the nonlinear electrical component (60), and a semiconductor electronic switching component (58), such as a transistor, connected in parallel with the nonlinear electrical component (60).

7. A system (10) for converting a first electrical voltage into a second electrical voltage, comprising:
- a converter (16) for converting a first electrical voltage into a second electrical voltage, the converter (16) comprising at least two input terminals (26A, 26B), at least two output terminals (28U, 28V, 28W; 144A, 144B), and at least one electronic switching branch (30) connected between the two input terminals (26A, 26B), the or each branch (30) comprising two switching half-branches (32A, 32B) serially connected at an intermediate terminal (34U, 34V, 34W; 146A, 146B), at least one half-branch (32A, 32B) including at least one switching member (36), the or each switching member (36) comprising a first controllable electronic switch (37) and a diode (38) connected in antiparallel with said first electronic switch (37),
- a control device (18) for controlling the or each first electronic switch (37) of the or each branch (30), and
- a protection device (21), for protecting the or each branch (30) against an electrical overcurrent,
**characterized in that** the protection device (21) is according to any one of the preceding claims.

8. A method for controlling a protection device (21), the protection device (21) being capable of protecting at least one electronic switching branch (30) of an electrical conversion system (10) against an electrical overcurrent, the or each branch (30) comprising two switching half-branches (32A, 32B) serially connected at an intermediate terminal (34U, 34V, 34W; 146A, 146B), at least one half-branch (32A, 32B) including at least one switching member (36), the or each switching member (36) comprising a first controllable electronic switch (37) and a diode (38) connected in antiparallel with said first electronic switch (37), the protection device (21) comprising, for the or each switching branch (30), at least one second electronic switch (46; 96),
the or each second electronic switch (46; 96) being connected to the intermediate terminal (34U, 34V, 34W; 146A, 146B) and to an output terminal (28U, 28V, 28W) of the electrical conversion system (10),
or being connected to an electrode of said diode (38) connected in antiparallel with the first electronic switch (37), serially with said respective diode (38) and in antiparallel to said first respective electronic switch (37),
the or each second electronic switch (46; 96) being capable of switching, under the action of a command, from an on state to an off state to protect said diode (38) against the overcurrent,
the method being **characterized in that** it comprises, for the or each second electronic switch (46; 96), the following steps:
- measuring (84), for the or each diode (38) capable of being protected by said second switch (46; 96), at least one magnitude relative to the current circulating **in that** diode (38),
- controlling the or each second electronic switch (46; 96) based on the magnitude measured by the measuring means (20).

9. The method according to claim 8, **characterized in that** the step for controlling the or each second electronic switch (46; 96) comprises:
- comparing (88) the or each received measurement (Iₘₑₛ₊; I_{mesU}, I_{mesV}, I_{mesW}, D_{mesU}, D_{mesV}, D_{mesW}) to a predetermined reference magnitude or another received measurement (Iₘₑₛ₊; I_{mesU}, I_{mesV}, I_{mesW}, D_{mesU}, D_{mesV}, D_{mesW}), and
- emitting (90) an opening or closing control signal to open or close the or one of the second electronic switch(es) (46; 96) based on the result of the comparison.

10. The method according to claim 9, **characterized in that**, during the measuring step (84), the measurement is a direct measurement of the intensity of the current circulating in the or each diode (38) of the or each branch (30), **in that** the comparison step consists of a comparison between the value of the measured intensity of the current circulating in at least one of the diodes capable of being protected by said second switch (46; 96) and the value of a reference intensity, and, during the step (90) for emitting a control signal, the control signal is an opening control signal when the deviation between the measured intensity of the current circulating in said at least one diode (38) and the reference intensity is above a predetermined gap.

11. The method according to claim 9, **characterized in that**, during the measuring step (84), the measurement is a measurement of the intensity of the current circulating in the or each diode (38) of the or each branch (30), via a measurement of the intensity of a main current comprising the current circulating in said diode (38), and **in that** the comparison step consists of a comparison between the value of the intensity of the main measured current and a zero value.

12. The method according to claim 10 or 11, **characterized in that**, during the measuring step (84), the measurement is a measurement of the intensity of the current circulating in the or each diode (38) of the or each branch (30) and the derivative of the intensity of the current circulating in the or each diode (38) of the or each branch (30), **in that** the comparison step consists of a comparison between the sign of the value of the intensity of the current circulating in at least one of the diodes (38) capable of being protected by said second switch (46; 96) and the sign of the value of the derivative of the intensity of the current circulating **in that** diode (38), and **in that**, during the step (90) for emitting a control signal, the control signal is an opening control signal, when the value of the intensity of the current circulating in said at least one diode (38) and the value of the derivative of that intensity have the same sign.

13. The method according to any one of claims 9 to 12, **characterized in that** the opening control signal is sent to the or each second electronic switch (46; 96), and is capable of commanding the simultaneous opening of all of the second electronic switches (46; 96) of the conversion system (10).

14. The method according to any one of claims 9 to 13, **characterized in that**, when the control signal of the or one of the second electronic switch(es) (46; 96) is an opening control signal, the control step further comprises the emission of a forced opening control signal of the or one of the first electronic switch(es) (37).
